# EUROPÄISCHE PATENTSCHRIFT

(11) **EP 3 183 466 B1**
(45) Veröffentlichungstag und Bekanntmachung des Hinweises auf die Patenterteilung: **15.07.2020**
(21) Anmeldenummer: 15736292.2
(22) Anmeldetag: 15.07.2015
(51) Int. Cl.: F16D 65/18

(54) **SCHEIBENBREMSE, BREMSSATTEL UND BREMSDREHHEBEL**
DISC BRAKE, BRAKE CALIPER, AND BRAKE ROTARY LEVER
FREIN À DISQUE, ÉTRIER DE FREIN ET LEVIER DE FREIN ROTATIF

(30) Priorität: 20.08.2014 DE 102014111864
(43) Veröffentlichungstag der Anmeldung: 28.06.2017
(73) Patentinhaber: KNORR-BREMSE Systeme für Nutzfahrzeuge GmbH, 80809 München (DE)
(72) Erfinder: KLINGNER, Matthias, 82272 Moorenweis (DE); WEBER, Ralf, 80992 München (DE); ADAMCZYK, Philipp, 87677 Stöttwang (DE); SCHEUFLER, Christian, 80807 München (DE)
(86) Internationale Anmeldenummer: PCT/EP2015/066094
(87) Internationale Veröffentlichungsnummer: WO 2016/026617

(56) Entgegenhaltungen:
- WO-A1-2014/041156
- DE-A1-102012 003 104
- DE-A1-102012 108 670

## Beschreibung

Die Erfindung betrifft eine Scheibenbremse nach dem Oberbegriff des Anspruchs 1, wie z.B. aus WO-A-2014/041156 hervorgeht. Die Erfindung bezieht sich auch auf einen Bremssattel und einen Bremsdrehhebel.

In Personenkraftwagen- und im Nutzfahrzeugbereich wird die Scheibenbremse bevorzugt. Bei der typischen Bauform einer Scheibenbremse besteht diese aus einem Bremssattel samt innerer Mechanik, aus in der Regel zwei Bremsbelägen und der Bremsscheibe. Auf die innere Mechanik, die auch als Zuspannmechanik bezeichnet wird, werden über eine Kraftquelle, z.B. über einen pneumatisch betätigten Zylinder, mittels einer Kolbenstange Kräfte eingeleitet, durch einen Exzentermechanismus verstärkt und als Zuspannkraft über Gewinderohre, die auch Gewindestempel, Gewindespindeln, Gewindestangen, Druckstempel o.ä. genannt werden, mit Druckstücken auf Bremsbeläge und Bremsscheibe übertragen, wobei über die Gewindestangen der Verschleiß von Bremsscheibe und Bremsbelägen ausgeglichen wird.

Die Zuspannkräfte wirken über beide Bremsbeläge auf die Bremsscheibe, welche in Abhängigkeit von der Höhe der Zuspannkraft eine Verzögerung der Rotationsbewegung erfährt. Der Bremsbelag, welcher auf der Zuspannseite der Bremsscheibe liegt, wird zuspannseitiger Bremsbelag genannt. Der andere Bremsbelag befindet sich auf der anderen Seite der Bremsscheibe, steht mit einem Sattelrücken des Bremssattels in Kontakt und wird als rückenseitiger Bremsbelag bezeichnet. Bei einem Bremsvorgang wird der zuspannseitige Belag in Richtung auf die Bremsscheibe bewegt. Sobald dieser sich in Kontakt mit der Bremsscheibe befindet, wird der Bremssattel durch die dabei entstehende Gegenkraft mit dem rückenseitigen Bremsbelag in Richtung auf die Bremsscheibe bewegt. Wenn nun der rückenseitige Bremsbelag auch die Bremsscheibe berührt, wird eine Bremswirkung erzeugt.

Die Scheibenbremsen werden in Axialbremsen und Radialbremsen unterschieden. Diese Begriffe beziehen sich auf die Zuspannkrafteinleitung in eine Zuspannmechanik in Bezug auf die Bremsscheibe. So erfolgt bei der Axialbremse die Zuspannkrafteinleitung in axialer Richtung auf die Bremsscheibe, d.h. in Richtung der Bremscheibenachse. Bei der Radialbremse erfolgt die Zuspannkrafteinleitung in eine Zuspannmechanik in radialer Richtung der Bremsscheibe.

Übliche Radialbremsen weisen mindestens zwei Gehäuse bzw. Bremssattelbauteile auf. Dies wird als nachteilig aufgrund der Teileanzahl und erforderlicher Dichtflächen als nachteilig angesehen.

Im Zuge von Gewichtsreduzierung und Kosten im Kraftfahrzeugbereich, insbesondere Nutzfahrzeugbereich, besteht ein ständiger Bedarf an kosten- sowie gewichtsoptimierten Scheibenbremse bei möglichst gleichbleibender und auch höherer Leistung sowie geringer Teilezahl.

Die Aufgabe der vorliegenden Erfindung besteht daher darin, eine verbesserte Scheibenbremse zu schaffen.

Eine weitere Aufgabe ist es, einen verbesserten Bremssattel bereitzustellen.

Eine noch weitere Aufgabe ist es, einen verbesserten Bremsdrehhebel zu schaffen.

Die Aufgabe wird durch eine Scheibenbremse mit den Merkmalen des Anspruchs 1 gelöst.

Die weitere Aufgabe wird durch einen Bremssattel mit den Merkmalen des Anspruchs 20 gelöst.

Die noch weitere Aufgabe wird durch einen Bremsdrehhebel mit den Merkmalen des Anspruchs 23 gelöst.

Es wird eine Scheibenbremse geschaffen, bei welcher eine Teileanzahl geringer als im Stand der Technik, wobei gleichzeitig eine verbesserte Krafteinleitung in die Struktur des Bremssattels vorliegt. Außerdem wird eine Reduktion von Dichtflächen ermöglicht.

Eine erfindungsgemäße Scheibenbremse geht aus Anspruch 1 hervor.

Durch diese Ausbildung des Bremssattels kann ein Raumbedarf der Scheibenbremse verringert werden, so dass ein deutlich größerer Freigang zu einer Achse eines zuzuordnenden Kraftfahrzeugs ermöglicht wird.

In einer Ausführung sind zwei oder mehr Spindeleinheiten mit jeweils einer in der Brücke eingeschraubten Gewindestange vorgesehen. Damit ergibt sich ein großer Einsatzbereich.

Der Aufbau des Zuspannabschnitts ist so ausgeführt, dass sich durch die Aufteilung in zwei Bereiche ein besonders raumsparender Aufbau in der Höhe des Zuspannabschnitts des Bremssattels ergibt. So weist der erste Bereich des Zuspannabschnitts mindestens eine Bodenwand auf, die im Wesentlichen parallel zu einem Abschnitt einer Deckwand des Zuspannabschnitts verläuft.

Zudem ergibt sich durch diesen kompakten Aufbau eine Reduzierung von Dichtflächen, da eine einstückige Ausführung des Bremssattels möglich ist.

Der erste Bereich ist durch die Stützwand von dem zweiten Bereich wenigstens zu einem Teil abgetrennt. Besonders vorteilhaft dabei ist, dass die Stützwand parallel zu der Bremsscheibe und verbunden mit der mindestens einen Bodenwand angeordnet ist. Denn so kann sie das Schwenklager für den Bremsdrehhebel bilden, wobei dieser gleichzeitig durch einfaches Einschieben durch den ersten Bereich leicht einbaubar ist, obwohl er eine relativ große Länge benötigt. Das Einschieben wird dadurch ermöglicht, dass zwischen dem Lagerabschnitt der Stützwand und der Innenseite der Deckwand ein Durchgang zwischen dem ersten Bereich und dem zweiten Bereich des Zuspannabschnitts vorgesehen ist.

Auch der der zweite Bereich des Zuspannabschnitts weist eine Bodenwand auf, welche im Wesentlichen parallel zu einem weiteren Abschnitt der Deckwand des Zuspannabschnitts verläuft. Hieraus ergibt sich die oben schon erwähnte raumsparende Konstruktion.

Es ist weiterhin vorteilhaft, wenn der weitere Abschnitt der Deckwand des Zuspannabschnitts im zweiten Bereich im Endbereich des Hebelgehäuses einen Flansch mit einer Öffnung zur Befestigung eines Kraftantriebs für die Scheibenbremse aufweist. Auf diese Weise wird kein zusätzliches Bauteil zur Befestigung eines Krafterzeugers, z.B. eines Druckluftzylinders, benötigt. Der Flansch kann z.B. durch Bearbeitung erzeugt und auch an unterschiedliche Anbau-/Einbaumaße angepasst werden.

In einer weiteren Ausführung ist vorgesehen, dass die Bodenwand des Hebelgehäuses an ihrer Innenseite einen zu der Innenseite des Hebelgehäuses hervorstehenden Anschlagabschnitt mit einer Anschlagfläche aufweist, welche unterhalb der Öffnung des Flansches angeordnet ist. Diese Anschlagfläche wirkt mit einer Anschlagfläche des Bremsdrehhebels, insbesondere mit dessen in dem Hebelgehäuse aufgenommenen Hebelabschnitt als Hubbegrenzung zusammen. Durch entsprechende Bearbeitung dieser zwei zusammenwirkenden Anschlagflächen kann ein Bremssattel für wenigstens zwei unterschiedliche Bremsen zum Einsatz kommen.

Weiterhin ist vorgesehen, dass der zweite Bereich des Zuspannabschnitts des Bremssattels eine Rückwand aufweist, welche parallel zu der Stützwand angeordnet ist. Auf diese Weise wird einerseits Bauraum eingespart und andererseits ein stabiles Hebelgehäuse gebildet.

Die parallel zu der Deckwand angeordneten Bodenwände sowie die parallel untereinander senkrecht dazu angeordnete Stützwand und Rückwand ermöglichen die Ausbildung des Bremssattels als ein Gussteil mit nur einem Kern oder mit zwei Kernen mit Anspiegelung.

Gemäß der Erfindung ist die Stützwand mit einer schrägen Stützwand verbunden, wobei sich die schräge Stützwand von der Bremsscheibe wegweisend in Richtung auf eine Bremsscheibenachse geneigt erstreckt und mit der Bodenwand des zweiten Bereichs verbunden ist. Mit Seitenwänden wird eine so genannte Außentasche gebildet, wodurch eine Gewichts- und Gussoptimierung erreicht werden kann.

Die schräge Stützwand bildet mit der Bodenwand einen Winkel dessen Wert ungleich 0° ist. Der Winkel weist einen Wert von 30º auf. Damit wird eine effektive Krafteinleitung bei Bremsvorgängen in den Bremssattel ermöglicht.

Eine weitere vorteilhaft stabile und gewichtsmäßig optimierte Ausführung wird dadurch erreicht, dass sich ein Querschnitt des Hebelgehäuses in Längsrichtung in Richtung auf die Bremsscheibe beginnend an der Verbindung der schrägen Stützwand mit der Bodenwand bis zu der Stützwand bzw. zu dem Durchgang verjüngt.

Für einen kompakten Aufbau bei gleichzeitig gleicher bzw. verbesserter Leistung sowie einfacher Montage ist es vorgesehen, dass der Bremsdrehhebel eine gebogene, schlanke Gestalt in seiner Längsrichtung mit einem Hebelkörper mit Seitenabschnitten, einer Längsversteifung und mindestens einem Drucklagerabschnitt aufweist.

Eine besonders stabile und kompakte Ausführung wird dadurch erreicht, dass der Hebelkörper des Bremsdrehhebels einen Hebelabschnitt und einen Kraftübertragungsabschnitt aufweist, welche an der Unterseite des Hebelkörpers mit der Längsversteifung verbunden sind.

In einer weiteren Ausführung weist der Hebelabschnitt ein Antriebsende auf, welches an einer Oberseite einen Antriebsabschnitt zur Zusammenwirkung mit einer Kolbenstange eines Krafterzeugers bestimmt ist, und wobei das Antriebsende an der Unterseite, welche dem Antriebsabschnitt gegenüber liegt, eine Anschlagfläche aufweist. Auf die Bearbeitung der Anschlagfläche wurde oben bereits einschließlich der Vorteile in Zusammenwirkung mit der Anschlagfläche auf der Bodenwand des Hebelgehäuses hingewiesen.

Es ist außerdem vorgesehen, dass der Kraftübertragungsabschnitt des Hebelkörpers einen in etwa halbkreisförmigen Mittelsteg aufweist, an den beiderseits jeweils ein halbkreisförmiger Drucklagerabschnitt mit einer jeweiligen Drucklagerfläche angeordnet ist, wobei der Mittelsteg von den Drucklagerabschnitten hervorsteht. Auf diese Weise können vorteilhaft Relativbewegungen des Bremsdrehhebels reduziert werden, wenn der von den Drucklagerabschnitten hervorstehende Mittelsteg in einer Führung der Brücke aufgenommen ist, wodurch eine formschlüssige Hebelführung des Bremsdrehhebels in Richtung der Bremsdrehhebelachse gebildet ist.

In einer noch weiteren Ausführung ist an der den Drucklagerflächen der Drucklagerabschnitte gegenüberliegenden Seite eine Lageraufnahme mit einem in etwa halbkreisförmigen Querschnitt eingeformt ist, wobei die Lageraufnahme eine Mittellinie aufweist, welche mit der Bremsdrehhebelachse identisch ist. Mit dieser Lageranordnung kann eine stabile Hysterese über die Lebensdauer ermöglicht werden.

Für eine erforderliche Exzentrizität des Kraftübertragungsabschnitts des Bremsdrehhebels ist die Mittellinie der Lageraufnahme exzentrisch zu einem Mittelpunkt der Radien der halbkreisförmigen Drucklagerflächen der Drucklagerabschnitte) angeordnet.

Weiterhin ist vorgesehen, dass ein Radius der Lageraufnahme kleiner, beispielsweise etwa 0,6...0,4-mal kleiner, als ein Radius der Drucklagerflächen der Drucklagerabschnitte ist. Dies ergibt den Vorteil, dass zusammen mit der gebogenen, möglichst schlanken Gestalt des Bremsdrehhebels ein einfacher Einbau des Bremsdrehhebels ermöglicht ist.

Es ist besonders vorteilhaft, dass der Bremssattel einstückig ausgebildet ist. Dadurch reduzieren sich unter anderem Dichtflächen und eine Teileanzahl.

In einer Ausführung kann die Scheibenbremse eine Nachstelleinrichtung aufweisen.

Die Scheibenbremse ist als eine Radialbremse ausgebildet.

Ein erfindungsgemäßer Bremssattel ist für die oben beschriebene Scheibenbremse bereitgestellt.

Ein erfindungsgemäßer Bremsdrehhebel ist für die oben beschriebene Scheibenbremse bereitgestellt.

Die Erfindung wird nun anhand einer beispielhaften Ausführung mit Bezug auf die beigefügten Zeichnungen näher erläutert. Hierbei zeigen:
- Fig. 1: eine schematische Draufsicht auf ein Ausführungsbeispiel einer erfindungsgemäßen Scheibenbremse;
- Fig. 2: eine schematische Seitenansicht der erfindungsgemäßen Scheibenbremse nach Fig. 1;
- Fig. 3: eine schematische Schnittansicht der erfindungsgemäßen Scheibenbremse nach Fig. 1;
- Fig. 4-5: schematische Schnittansichten der erfindungsgemäßen Scheibenbremse nach Fig. 2;
- Fig. 6-7: schematische Perspektivansichten eines erfindungsgemäßen Bremssattels der erfindungsgemäßen Scheibenbremse nach Fig. 1 und 2; und
- Fig. 8-11: schematische Ansichten eines erfindungsgemäßen Bremsdrehhebels der erfindungsgemäßen Scheibenbremse nach Fig. 1 und 2.

Koordinaten x, y, z in den Figuren dienen zur Erleichterung der Orientierung.

Mit den Bezugszeichen ZS ist eine Zuspannseite der Scheibenbremse 1 bezeichnet, und das Bezugszeichen RS gibt eine Rückenseite der Scheibenbremse 1 an.

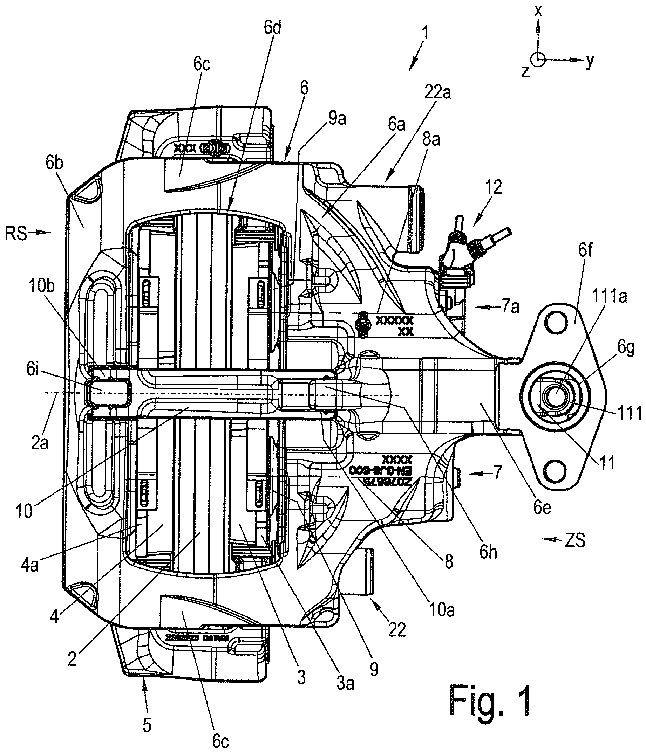

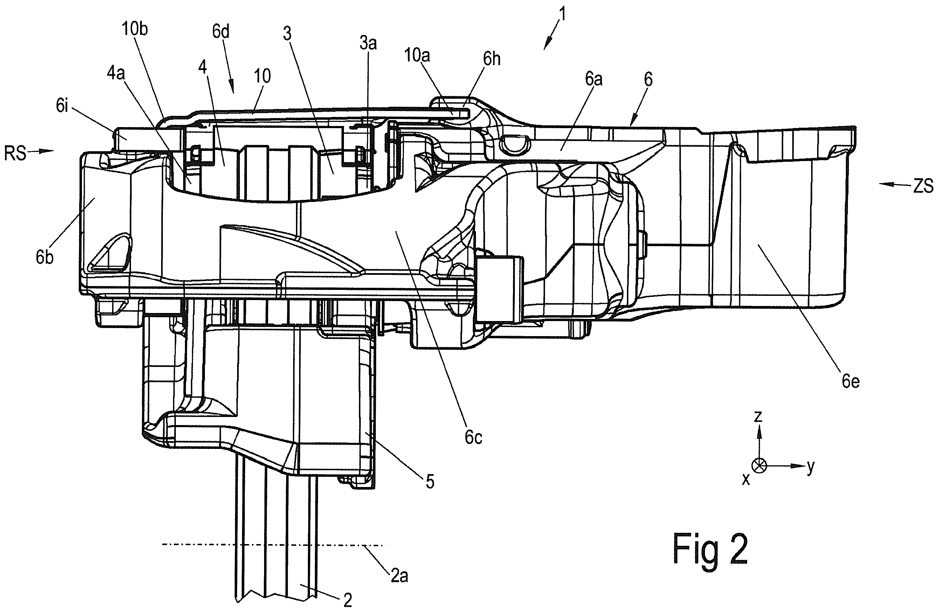

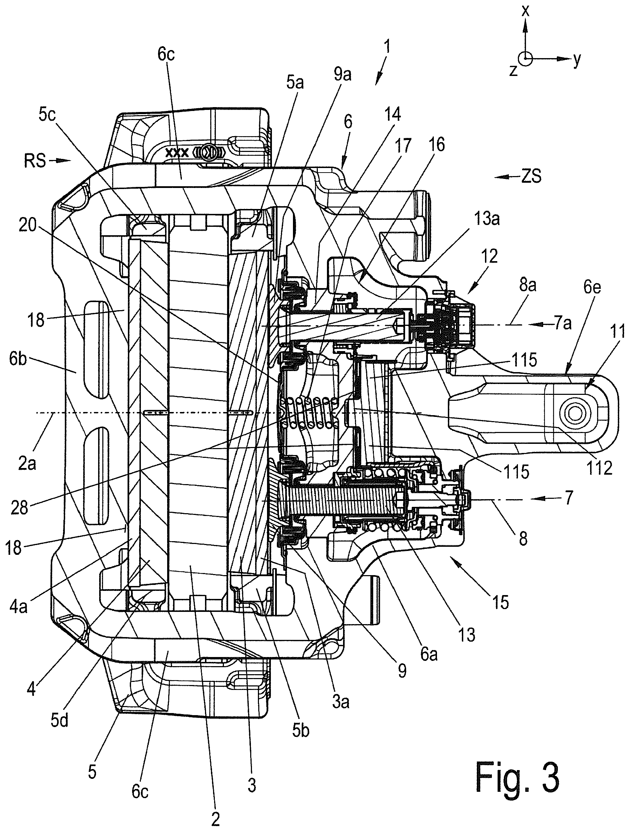

Fig. 1 zeigt eine schematische Draufsicht auf ein Ausführungsbeispiel einer erfindungsgemäßen Scheibenbremse 1. In Fig. 2 ist eine schematische Seitenansicht der erfindungsgemäßen Scheibenbremse 1 nach Fig. 1 dargestellt. Fig. 3 zeigt eine schematische Schnittansicht der erfindungsgemäßen Scheibenbremse 1 nach Fig. 1 in einer x-y-Ebene.

Die Scheibenbremse 1 weist eine Bremsscheibe 2 mit einer Bremsscheibenachse 2a auf. Die Bremsscheibe 2 liegt in einer x-z-Ebene, wobei die Bremsscheibenachse 2a in y-Richtung verläuft. Auf einer zuspannseitigen Seite der Bremsscheibe 2 ist ein zuspannseitiger Bremsbelag 3 mit einem Bremsbelagträger 3a angeordnet. Ein weiterer, rückenseitiger Bremsbelag 4 mit einem Bremsbelagträger 4a ist auf einer rückenseitigen Seite der Bremsscheibe 2 angeordnet. Die Bremsbeläge 3 und 4 sind jeweils in einem Aufnahmeschacht eines Bremsträgers 5 aufgenommen (Fig. 3). Der Bremsträger 5 ist ortsfest an einem zugehörigen Fahrzeug angebracht, was nicht näher gezeigt ist. Der zuspannseitige Bremsbelag 3 ist in seinem Aufnahmeschacht an beiden Seiten des Aufnahmeschachts durch so genannte Bremsträgerhörner 5a, 5b, die sich in z-Richtung erstrecken, in x-Richtung gehalten und geführt. In ähnlicher Weise ist der rückenseitige Bremsbelag 4 zwischen Bremsträgerhörnern 5c, 5d angeordnet. In diesem Ausführungsbeispiel ist der zuspannseitige Bremsbelag 3 in x-Richtung kürzer als der rückenseitige Bremsbelag 4. Dies ist in Fig. 3 deutlich zu erkennen.

Die Scheibenbremse 1 ist eine so genannte Radialbremse, d.h. eine Zuspannkrafteinleitung in eine Zuspannmechanik auf der Zuspannseite ZS erfolgt in Bezug auf die Bremsscheibe 2 in radialer Richtung, die hier in der z-Richtung verläuft.

Die Bremsscheibe 2 ist in einem Randbereich von einem, hier als Schwimmsattel ausgeführten, Bremssattel 6 rahmenartig übergriffen. Der Bremssattel 6 umfasst einen Zuspannabschnitt 6a, einen Sattelrücken 6b, zwei Zugstreben 6c und ein Hebelgehäuse 6e mit einem Flansch 6f.

Der Zuspannabschnitt 6a befindet sich auf der Zuspannseite ZS und nimmt die Zuspannmechanik der Scheibenbremse 1 auf. Die Zuspannmechanik wird unten noch erläutert. Der Sattelrücken 6b ist auf der Rückenseite RS angeordnet, wobei eine gedachte Längsachse des Sattelrückens 6b in x-Richtung verläuft. Die zwei Zugstreben 6c sind über der Bremsscheibe 2 angeordnet, wobei ihre gedachten Längsachsen parallel zueinander und parallel zu der Bremsscheibenachse 2a in y-Richtung verlaufen. Die beiden Zugstreben 6c sind jeweils seitlich mit einem Ende des Zuspannabschnitts 6a und mit einem Ende des Sattelrückens 6b miteinander fest verbunden und mit diesen einstückig, z.B. als Gussteil, ausgebildet. Dabei bilden der Zuspannabschnitt 6a, der Sattelrücken 6b und die beiden Zugstreben 6c zwischen sich eine Montageöffnung 6d, durch welche die Bremsbeläge 3, 4 links und rechts neben der Bremsscheibe 2 in ihre Aufnahmeschächte in dem Bremsträger 5 in z-Richtung einsetzbar und herausnehmbar sind.

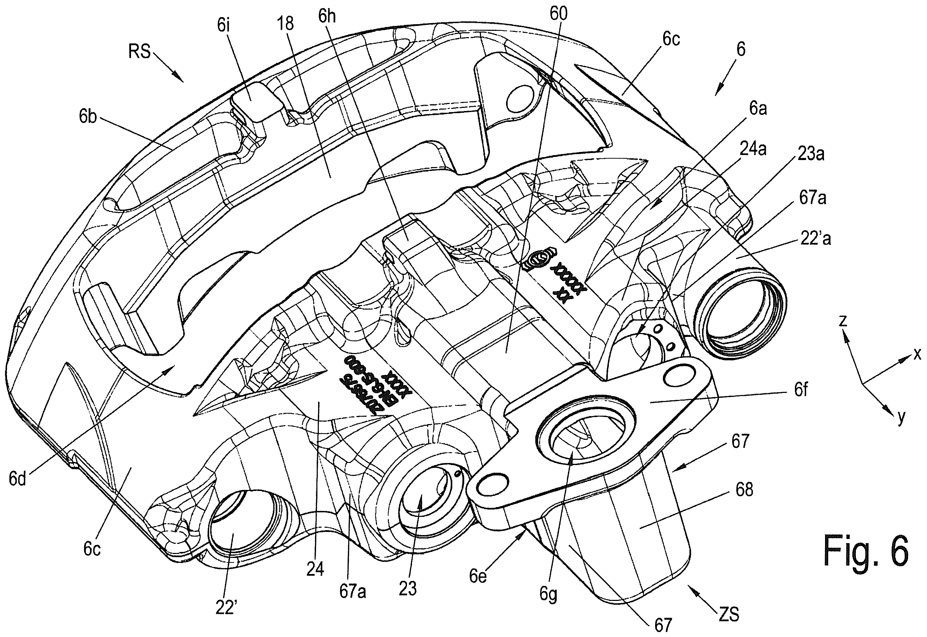

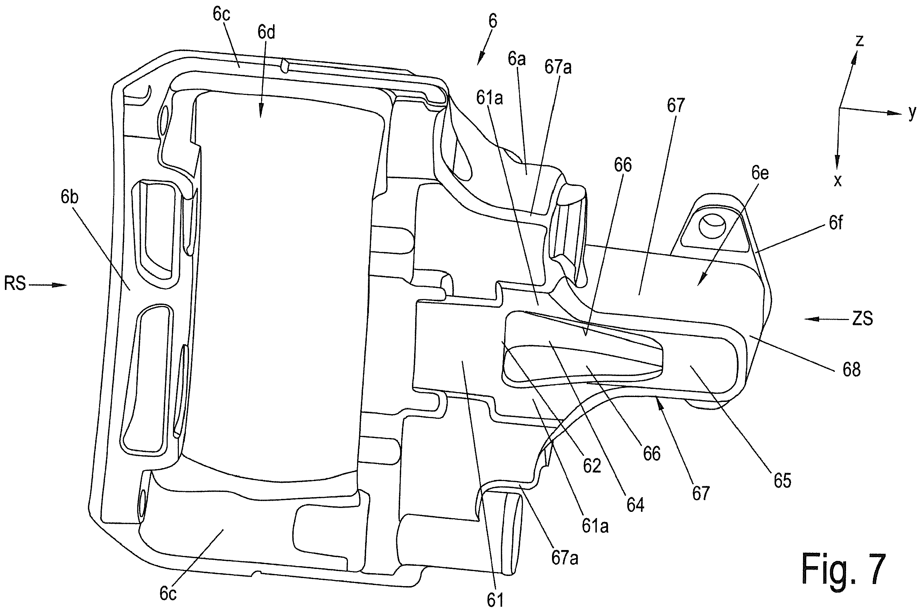

Der Bremssattel 6 ist über Axiallager 22, 22a in nicht näher gezeigter Weise an dem Bremsträger 5 in y-Richtung verschiebbar angebracht und wird unten noch weiter im Zusammenhang mit den Figuren 6 und 7 beschrieben.

Die Bremsbeläge 3, 4 sind in ihren Aufnahmeschächten in dem Bremsträger 5 durch einen Belaghaltebügel 10 gehalten. Der Belaghaltebügel 10 erstreckt sich über der Bremsscheibe 2 in Richtung der Bremsscheibenachse 2a in y-Richtung und überbrückt die Montageöffnung 6d des Bremssattels 6. Der Belaghaltebügel 10 ist mit einem zuspannseitigen Endabschnitt 10a in einem Bügellager 6h an der Oberseite des Zuspannabschnitts 6a des Bremssattels 6 gehalten. Ein rückenseitiger Endabschnitt 10b des Belaghaltebügels 10 ist in einem weiteren Bügellager 6i an der Oberseite des Sattelrückens 6b des Bremssattels 6 festgelegt. Dabei steht die Unterseite des Belaghaltebügels 10 mit nicht näher bezeichneten Belaghaltefedern der Bremsbeläge 3, 4 in Kontakt.

Die Scheibenbremse 1 ist hier als zweistempelige Bremse mit zwei Spindeleinheiten 7, 7a mit jeweils einer Gewindestange 13, 13a ausgebildet. Die Gewindestangen 13, 13a können auch als Gewinderohre, Gewindestempel, Gewindespindeln oder Druckspindeln bezeichnet werden. Drehachsen der Spindeleinheiten 14, 14' werden hier als Spindelachsen 8, 8a bezeichnet.

Der zuspannseitige Bremsbelag 3 steht mit seinem Bremsbelagträger 4a mit den Gewindestangen 13, 13a der Spindeleinheiten 7, 7a jeweils über ein Druckstück 9, 9a in Verbindung. Die Druckstücke 9, 9a sind jeweils an einem Ende der Gewindestangen 13, 13a angebracht.

Der rückenseitige Bremsbelag 4 wird auch reaktionsseitiger Bremsbelag 4 genannt und ist mit seinem Bremsbelagträger 4a auf der anderen Seite der Bremsscheibe 2, d.h. auf der Rückenseite RS, im Bremssattel 6 festgelegt. Dabei steht die zur Rückenseite RS weisende Seite des Bremsbelagträgers 4a mit dem Sattelrücken 6b über einen zur Bremsscheibe 2 weisenden Druckabschnitt 18 des Sattelrückens 6b in Kontakt. Der Druckabschnitt 18 erstreckt sich parallel zu der Bremsscheibe 2 und rechtwinklig zu der Bremsscheibenachse 2a in x-Richtung.

Die Gewindestangen 13, 13a weisen jeweils ein Außengewinde auf und sind jeweils in einer Brücke 14 in zugehörigen Innengewinden verdrehbar angeordnet. Die Brücke 14 wird auch als Traverse bezeichnet, ist in dem Zuspannabschnitt 6a des Bremssattels 6 angeordnet, erstreckt sich in x-Richtung und ist ein Teil der Zuspannmechanik.

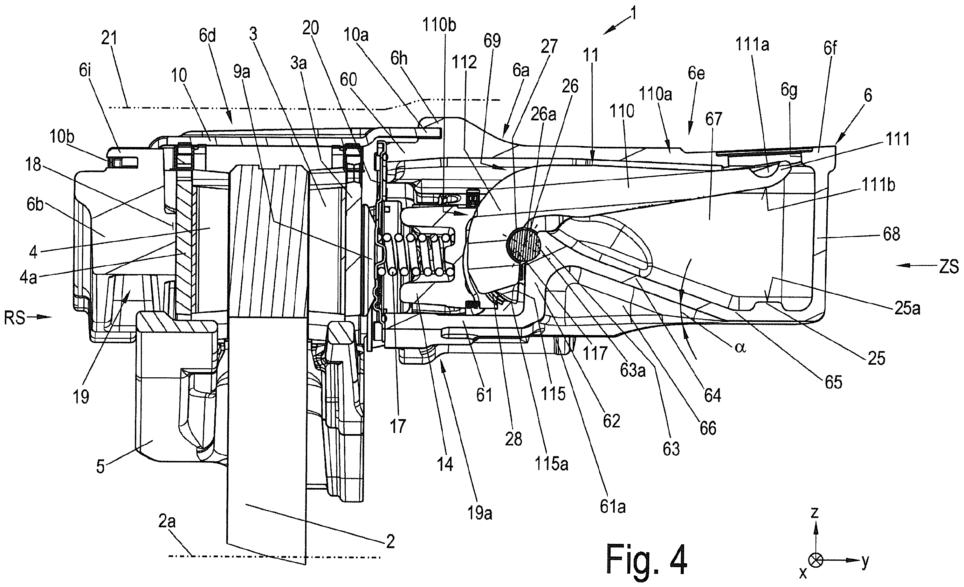

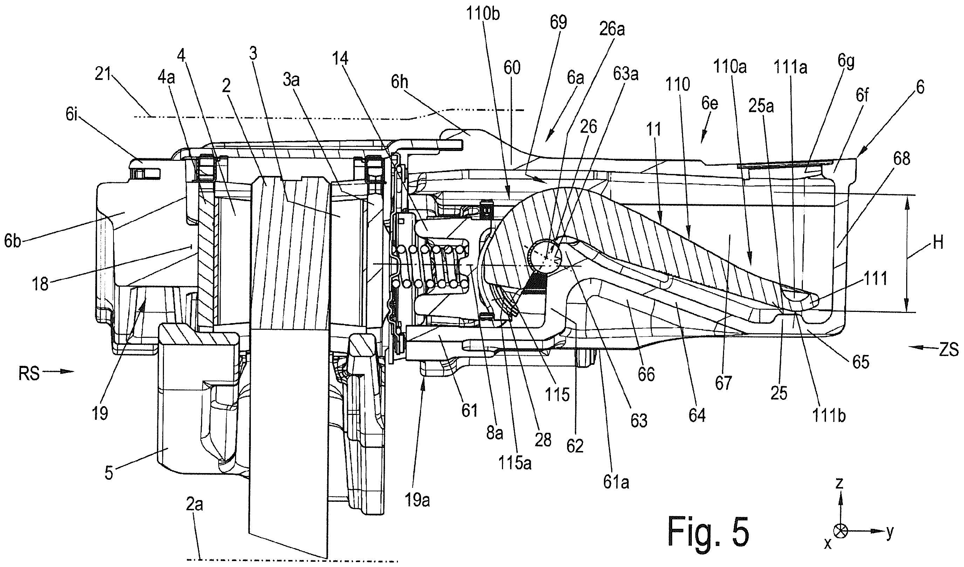

Die Brücke 14 und somit die Gewindestangen 13, 13a sind von einem Bremsdrehhebel 11 mit einer Bremsdrehhebelachse 26a (siehe Fig. 4, 5), die rechtwinklig zu der Bremsscheibenachse 2a verläuft, betätigbar. Der Bremsdrehhebel 11 wird unten noch ausführlich beschrieben und steht mit der Brücke 14 über Drucklagerabschnitte 115 (siehe auch Fig. 4, 5; 8-11) und Lagersegmente 28 (Fig. 4, 5) in Zusammenwirkung. Ein Mittelsteg 112 (siehe auch Fig. 4, 5; 8-11) des Bremsdrehhebels 11 ist in der Brücke 14 in einer nicht näher bezeichneten Führung geführt und bildet eine Hebelführung in positiver und negativer x-Richtung in der Brücke 14, wodurch Relativbewegungen reduziert werden. Der Bremsdrehhebel 11 ist in einer y-z-Ebene innerhalb des Zuspannabschnitts 6a und innerhalb des Hebelgehäuses 6e des Bremssattels 6 angeordnet (Fig. 4, 5). Dies wird unten noch weiter erläutert. Ein im Endbereich des Hebelgehäuses 6e unterhalb des Flansches 6f des Bremssattels 6 angeordnetes Antriebsende 111 des Bremsdrehhebels 11 ist mit einem Antriebsabschnitt 111a versehen, welcher nach oben zu dem Flansch 6f weist. Der Flansch 6f ist mit einer Öffnung 6g versehen und dient zur Befestigung eines nicht gezeigten Druckluftzylinders (oder eines anderen Krafterzeugers), welcher sich in z-Richtung erstreckt und mit einer nicht gezeigten Kolbenstange mit dem Antriebsabschnitt 111a des Antriebsendes 111 des Bremsdrehhebels 11 in Wirkverbindung steht. Auf diese Weise erfolgt eine Krafteinleitung in das Antriebsende 111 des Bremsdrehhebels 11. Dies wird unten noch weiter erläutert.

Die Brücke 14 ist in Richtung der Bremsscheibenachse 2a in y-Richtung durch den Bremsdrehhebel 11 verstellbar. Eine Bewegung auf die Bremsscheibe 2 wird als Zuspannbewegung bezeichnet, und eine Bewegung in Gegenrichtung wird Lösebewegung genannt. Eine Rückstellfeder 17 ist in der Mitte der Brücke 14 in einer entsprechenden Ausnehmung auf der belagseitigen Seite der Brücke 14 aufgenommen und stützt sich an einer Bodenplatte 20 ab. Die Bodenplatte 20 wird auch als Bodenblech bezeichnet und verschließt den Zuspannabschnitt 6a zur Bremsscheibe 2 hin, wobei die zur Bremsscheibe 2 zugewandten Enden der Gewindestangen 13, 13a mit Abschnitten der zugehörigen Druckstücke 9, 9a sich durch nicht näher bezeichnete Öffnungen der Bodenplatte 20 mit entsprechenden Dichtung hindurch erstrecken. Mittels der Rückstellfeder 17 wird die Brücke 14 bei der Lösebewegung in die in Fig. 1 und 4 gezeigte gelöste Stellung der Scheibenbremse 1 zurück verstellt.

Die Scheibenbremse 1 kann unterschiedliche Kraftantriebe aufweisen. Der Bremsdrehhebel 11 wird hier z.B. durch einen Druckluftzylinder pneumatisch betätigt. Zu Aufbau und Funktion einer pneumatischen Scheibenbremse 1 wird auf die entsprechende Beschreibung der DE 197 29 024 C1 verwiesen.

Ein Abstand zwischen den Bremsbelägen 3, 4 und der Bremsscheibe 2 in der gelösten Stellung wird als Lüftspiel bezeichnet. Infolge von Belag- und Scheibenverschleiß wird dieses Lüftspiel größer. Wenn dies nicht kompensiert wird, kann die Scheibenbremse 1 ihre Spitzenleistung nicht erreichen, da ein Betätigungshub der Zuspannmechanik, d.h. hier der Betätigungshub bzw. ein Schwenkwinkel des Bremsdrehhebels 11 um die Bremsdrehhebelachse 26a (Fig. 4, 5), nicht mehr ausreicht.

In diesem Ausführungsbeispiel ist auf der in Fig. 1 gezeigten unteren Spindeleinheit 7 auf der Gewindestange 13 eine Nachstelleinrichtung 15 koaxial mit der Mittelachse aufgesetzt. Unter dem Begriff "Nachstellung" ist eine Lüftspielverkleinerung zu verstehen. Das vorher festgelegte Lüftspiel ist durch die Geometrie der Scheibenbremse 1 bestimmt und weist ein so genanntes konstruktives Lüftspiel auf. Mit anderen Worten, die Nachstelleinrichtung 15 verkleinert ein vorhandenes Lüftspiel, wenn dieses in Bezug auf das vorher festgelegte Lüftspiel zu groß ist, auf den Sollwert des vorher festgelegten Lüftspiels. Eine ausführliche Beschreibung einer solchen Nachstelleinrichtung 15 kann dem Dokument DE 10 2004 037 771 A1 entnommen werden.

Die in Fig. 1 gezeigte obere Spindeleinheit 7a ist mit einem Sensor 12 versehen, welcher koaxial zu der oberen Spindeleinheit 7a, zu deren Gewindestange 13a und der Spindelachse 8a angeordnet ist. Der Sensor 12 dient zur Erfassung eines Verschleißes von Bremsbelägen 3, 4 und Bremsscheibe 2 und wird hier nicht weiter beschrieben.

Die Spindelachsen 8, 8a und die Bremsscheibenachse 2a sind parallel zueinander angeordnet.

Die Nachstelleinrichtung 15 steht über einen nicht näher bezeichneten Antrieb mit dem Bremsdrehhebel 11 in Zusammenwirkung.

Die Gewindestangen 13 und 13a sind mit einer nicht näher beschriebenen Synchronisationseinheit 16 derart gekoppelt, dass eine Verdrehbewegung der Gewindestange 13 um die Spindelachse 8 eine Verdrehbewegung der anderen Gewindestange 13a um deren Spindelachse 8a bewirkt und umgekehrt.

Die Nachstelleinrichtung 15 verdreht im Falle einer Nachstellung aufgrund von Verschleiß von Bremsbelägen 3, 4 und Bremsscheibe 2 die untere Gewindestange 13, wodurch mittels der Synchronisationseinheit 16 diese Verdrehbewegung der Gewindestange 13 auf die andere Gewindestange 13a übertragen wird. Mit der Synchronisationseinheit 16 ist eine synchrone Bewegung der Gewindestangen 13 und 13a der Spindeleinheiten 7 und 7a bei Nachstellvorgängen (und evtl. Rückstellvorgängen, je nach der Art der Nachstelleinrichtung 15, die auch zur Vergrößerung eines Lüftspiels ausgestaltet sein kann) und Einstellungen bei Wartungsarbeiten, z.B. Bremsbelagwechsel, (manueller Antrieb z.B. über ein Betätigungsende einer Gewindestange 13, 13a oder/und einen Antriebsabschnitt der Nachstelleinrichtung 15) gewährleistet.

Beim Betätigen bei einem Zuspannvorgang der Scheibenbremse 1 wird die benötigte Zuspannkraft über den exzentrisch zu den Spindeleinheiten 7, 7a gelagerten Bremsdrehhebel 11 erzeugt und von diesem auf die Brücke 14 übertragen. Die so auf die Brücke 14 übertragene Zuspannkraft wird dann durch die beiden Spindeleinheiten 7, 7a, deren Gewindestangen 13, 13a mit den Druckstücken 9, 9a auf den Bremsbelagträger 3a des zuspannseitigen Bremsbelags 3 und über den Bremssattel 6, d.h. über die Zugstreben 6c auf den Sattelrücken 6b und von diesem über den Druckabschnitt 18 auch auf den Bremsbelagträger 4a des rückenseitigen Bremsbelags 4 und dann auf die Bremsscheibe 2 übertragen. Bei diesem Vorgang werden die Spindeleinheiten 7, 7a in Richtung auf die Bremsscheibe 2 zubewegt. Sobald der zuspannseitige Bremsbelag 3 sich in Kontakt mit der Bremsscheibe 2 befindet, wird durch die entstehende Gegenkraft der Bremssattel 6 mit dem rückenseitigen Bremsbelag 4 auch in Richtung auf die Bremsscheibe 2 entgegengesetzt zu der Richtung des zuspannseitigen Bremsbelags 3 zubewegt. Sobald auch der rückenseitige Bremsbelag 4 die Bremsscheibe 2 berührt, wird eine Bremswirkung erzeugt.

In Fig. 4 und 5 sind schematische Schnittansichten der erfindungsgemäßen Scheibenbremse nach Fig. 2 dargestellt. Dabei zeigt Fig. 4 die gelöste Stellung der Scheibenbremse 1, wohingegen in Fig. 5 die zugespannte Stellung dargestellt ist.

Es ist ein Schnitt in einer y-z-Ebene, die senkrecht auf der Bremscheibenachse 2a steht, in beiden Fig. 4, 5 gezeigt. Dabei ist deutlich erkennbar, dass der Sattelrücken 6b des Bremssattels 6 zusammen mit dem Druckabschnitt 18 massiv ausgeführt sind.

Der Zuspannabschnitt 6a weist zwei Bereiche auf. Ein erster Bereich ist der Bremsscheibe 2 zugewandt und nimmt die Zuspannmechanik mit der Brücke 14 und der Rückstellfeder 17, den in der Brücke 14 eingeschraubten Gewindestangen 13, 13a, der Nachstelleinrichtung 15 (siehe Fig. 3) und einen Kraftübertragungsabschnitt 110b des Bremsdrehhebels 11 auf. Ein zweiter Bereich ist das Hebelgehäuse 6e, welches sich in positiver y-Richtung an den ersten Bereich anschließt. Zwischen diesen beiden Bereichen ist eine parallel zur Bremsscheibe 2 angeordnete Stützwand 62 mit einem Lagerabschnitt 63 einer Schwenklagerung für den Bremsdrehhebel 11 angeordnet. Oberhalb des Lagerabschnitts 63 der Stützwand 62 ist ein Durchgang 69 zwischen dieser und einer Deckwand 60 gebildet, welcher die beiden Bereiche verbindet.

Der Zuspannabschnitt 6a weist zusammen mit dem Hebelgehäuse 6e die gemeinsame Deckwand 60 auf. Die Deckwand 60 erstreckt sich von der Bremsscheibe 2 her in y-Richtung in leicht gebogener Form, von links nach rechts erst leicht in z-Richtung ansteigend, dann weiter in negativer z-Richtung abfallend bis zu dem Flansch 6f hin. Der Flansch 6f ist an seiner Oberseite in einer x-y-Ebene plan bearbeitet und weist die Öffnung 6g in z-Richtung auf.

Der zur Bremsscheibe 2 hin weisende erste Bereich des Zuspannabschnitts 6a ist von oben von der Deckwand 60 und von unten von einer Bodenwand 61 umgeben. Seitlich ist dieser Bereich auf beiden Seiten jeweils von einer Seitenwand 67a (siehe Fig. 6, 7) eingeschlossen und zu dem Hebelgehäuse 6e durch die Stützwand 62 abgegrenzt.

Die Bodenwand 61 verläuft in einer x-y-Ebene im Wesentlichen parallel zu einer gedachten x-y-Ebene der leicht gebogenen Deckwand 60. Die Stützwand 62 ist an dem rechten Ende der Bodenwand 61 angeformt und erstreckt sich senkrecht zu der Bodenwand 61 in einer x-z-Ebene nach oben in z-Richtung. Der obere Endbereich der Stützwand 62 ist mit einer Verdickung im Querschnitt versehen, welche einen Lagerabschnitt 63 mit einer sich in x-Richtung senkrecht zur Zeichenebene erstreckenden Lageraufnahme 63a aufweist. Ein Querschnitt der Lageraufnahme 63a ist kreisabschnittsförmig und nimmt mit einem bestimmten Umschlingungswinkel einen Zylinderstift 26 mit kreisförmigen Querschnitt auf. Die Mittelachse der Lageraufnahme 63a und eine Mittelachse des Zylinderstifts 26 sind identisch und bilden gemeinsam die Bremsdrehhebelachse 26a.

Wie in Fig. 5 verdeutlicht ist, ist die Bremsdrehhebelachse 26a hier in z-Richtung über den Spindelachsen 8, 8a, d.h. exzentrisch zu diesen, angeordnet.

Der Bremsdrehhebel 11 ist an der Seite seines Kraftübertragungsabschnitts 110b, welcher von der Bremsscheibe 2 abgewandt ist, mit einer Lageraufnahme 117 versehen, in welcher der Zylinderstift 26 in eine Lagerschale 27 aufgenommen ist. Der Bremsdrehhebel 11 wird unten noch weiter ausführlich beschrieben.

Zwischen der Oberseite des Lagerabschnitts 63 der Stützwand 62 und der Innenseite der Deckwand 60 ist ein Freiraum als Durchgang 69 gebildet, der eine in z-Richtung verlaufende Länge aufweist, die in etwa der Länge der Stützwand 62 in z-Richtung entspricht.

An dem Lagerabschnitt 63 der Stützwand 62 ist eine weitere, schräge Stützwand 64 angeformt, welche sich in y-Richtung nach rechts durch das Hebelgehäuse 6e nach unten in z-Richtung abfallend erstreckt und an ihrem Ende in eine weitere Bodenwand 65 übergeht. Diese schräge Stützwand 64 bildet mit der Bodenwand 65, welche in einer x-y-Ebene angeordnet ist, einen Winkel a, der einen Wert von ungleich 0° aufweist. Diese Geometrie wurde zur Einleitung der Zuspannkräfte in den Bremssattel 6 gewählt, wobei eine Kraftableitung aus dem Lagerabschnitt 63 in einem möglichst flachen Winkel α in das Hebelgehäuse 6e und somit in den Bremssattel 6 erfolgt. Dabei hat es sich herausgestellt, dass ein Winkel α mit vorzugsweise 30° eine sehr effektive Krafteinleitung ermöglicht.

Die Bodenwand 65 und die Bodenwand 61 können in einer gleichen Ebene oder in verschiedenen Ebenen, die parallel zueinander liegen, verlaufen. Außerdem ist hier die Bodenwand 65 im Wesentlichen parallel zu der gedachten x-y-Ebene der Deckwand 60, insbesondere zu der Oberseite des Flansches 6f angeordnet.

Die Stützwand 62 und die schräge Stützwand 64 bilden in dem Innenraum des Hebelgehäuses eine keilförmige Gestalt, die auch als Außentasche bezeichnet wird. Dies ergibt eine Gewichts- und Gussoptimierung des Bremssattels 6 .Dabei ist die schräge Stützwand 64 beidseitig mit Stützseitenwänden 66 (siehe auch Fig. 7) verbunden, wodurch das Hebelgehäuse 6e in diesem Bereich verschlossen ist. Das Hebelgehäuse 6e ist somit von einem Abschnitt der Deckwand 60 mit dem Flansch 6f von oben, von der schrägen Stützwand 64 mit ihren Stützseitenwände 66 und der Bodenwand 65 sowie Abschnitten der Bodenwand 61a (siehe auch Fig. 7) nach unten, von der Stützwand 62 nach links zum Zuspannabschnitt 6a, beidseitig von den Seitenwänden 67 und auf der rechten Seite in Fig. 4, 5 von einer Rückwand 68 umgeben. Auf diese Weise verjüngt sich ein Querschnitt des Hebelgehäuses 6e in Längsrichtung in negativer y-Richtung beginnend an der Verbindung der schrägen Stützwand 64 mit der Bodenwand 65 bis zu der Stützwand 62 bzw. zu dem Durchgang 69.

Die Rückwand 68 erstreckt sich in einer x-z-Ebene und ist mit der Deckwand 60, d.h. mit dem Flansch 6f, mit der Bodenwand 65 und den Seitenwänden 67 verbunden.

Die Stützwand 62 und die Rückwand 68 sind zueinander und auch zu der Bodenplatte 20 parallel angeordnet. Da sie in x-z-Ebenen angeordnet sind, sind sie auch parallel zu der Bremsscheibe 2.

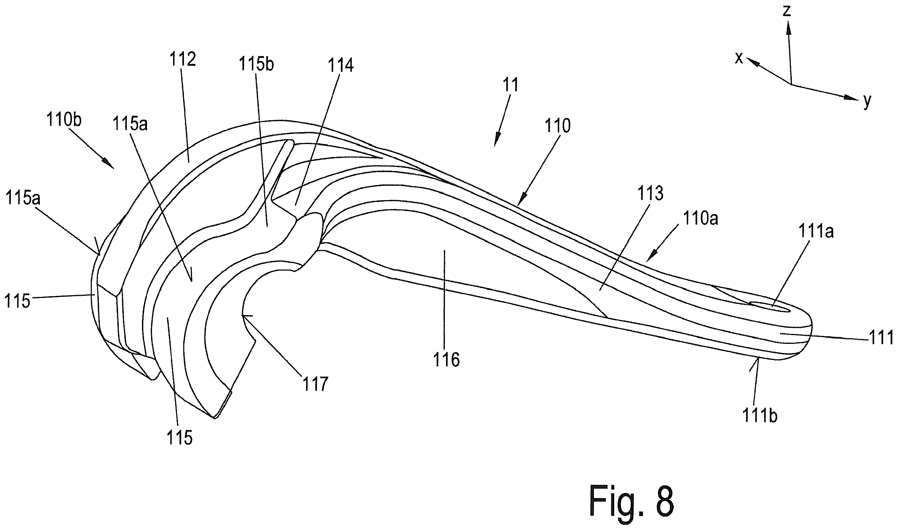

Der Bremsdrehhebel 11 besitzt eine gebogene, möglichst schlanke Gestalt in seiner Längsrichtung (y-Richtung) (Fig. 8-11) mit einem Hebelkörper 110, welcher sich durch den Durchgang 69 hindurch in das Hebelgehäuse 6e hinein mit einem Hebelabschnitt 110a des Körpers 110 mit dem Antriebsende 111 erstreckt. Ein Übergang des Hebelabschnitts 110a in den Kraftübertragungsabschnitt 110b liegt im Bereich des Durchgangs 69.

Der Mittelsteg 112 des Hebelkörpers 110 des Bremsdrehhebels 11 (siehe auch Fig. 8-11) ist im Bereich des Kraftübertragungsabschnitts 110b beidseitig mit Drucklagerabschnitten 115 versehen. Diese werden unten noch im Zusammenhang mit den Figuren 8-11 erläutert. Die Drucklagerabschnitte 115 weisen Drucklagerflächen 115a auf, welche der Bremsscheibe 2 zugewandt sind und über Lagersegmente 28, z.B. Nadellagersegmente, mit der Brücke 14 in Zusammenwirkung stehen.

Der Antriebsabschnitt 111a des Antriebsendes 111 des Bremsdrehhebels 11 ist in der in Fig. 4 gezeigten gelösten Stellung der Scheibenbremse 1 unterhalb der Öffnung 6g des Bremssattels 6 angeordnet. Der Hebelkörper 110 des Bremsdrehhebels 11 ist in dieser Stellung derart innerhalb des Hebelgehäuses 6e des Bremssattels 6 angeordnet, dass die Oberseite des Hebelkörpers 110 im Wesentlichen parallel zu der Innenseite des Abschnitts der Deckwand 60 des Hebelgehäuses 6e verläuft, wobei das Antriebsende 111 von der Innenseite des Bremssattels 6 her zu einem bestimmten Teil in die Öffnung 6g hineinragt.

An der Unterseite des Antriebsendes 111 des Bremsdrehhebels 11 ist eine Anschlagfläche 111b vorgesehen, welche z.B. durch eine spanabhebende Bearbeitung, z.B. Fräsen, Schleifen, hergestellt ist. Die Anschlagfläche 111b wirkt in der in Fig. 5 gezeigten zugespannten Stellung der Scheibenbremse 1 mit einer ortsfesten Anschlagfläche 25a eines Anschlagabschnitts 25 des Bremssattels 6 zusammen. Der Anschlagabschnitt 25 steht an der Innenseite der Bodenwand 65 des Bremssattels 6 nach innen hervor. Die Anschlagfläche 25a dieses Anschlagabschnitts 25 ist ebenfalls bearbeitet, z.B. durch Fräsen, Schleifen.

In der zugespannten Stellung (Fig. 5) ist der Bremsdrehhebel 11 um die Bremsdrehhebelachse 26a durch Einwirkung der Kolbenstange des Druckluftzylinders (nicht gezeigt, aber leicht vorstellbar) im Uhrzeigersinn verschwenkt. Aufgrund der Exzentrizität des Kraftübertragungsabschnitts 110b zu den Spindelachsen 8, 8a, die in einer x-y-Ebene liegen, welche mittig durch die Ebene einer Längsachse der Brücke 14 verläuft, wirkt die in das Antriebsende 111 des Bremsdrehhebels 11 eingeleitete Zuspannkraft verstärkt durch ein Hebelverhältnis des Bremsdrehhebels 11 über die Drucklagerabschnitte 115 und die Lagersegmente 28 derart auf die Brücke 14 ein, dass diese auf die Bremsscheibe 2 hin in negativer y-Richtung verschoben wird und eine Bremswirkung auftritt. Das Hebelverhältnis des Bremsdrehhebels 11 ist gebildet durch eine Länge des Hebelabschnitts 110a des Hebelkörpers 110 und durch eine Länge des Kraftübertragungsabschnitts 110b, jeweils bezogen auf die Bremsdrehhebelachse 26a.

Beim Zuspannen verläuft das Antriebsende 111 des Bremsdrehhebels 11 auf einem Kreisbahnabschnitt um die Bremsdrehhebelachse 26a. Eine Sehne dieses Kreisbahnabschnitts ist hier als Hub H des Bremsdrehhebels 11 bezeichnet.

Fig. 5 zeigt deutlich, dass in diesem Beispiel in der zugespannten Stellung die Oberseite des Hebelkörpers 110 nun im Wesentlichen parallel zu der Innenseite der schrägen Stützwand 64 des Hebelgehäuses 6e verläuft, wobei die Anschlagfläche 111b des Antriebsendes 111 kurz vor der Anschlagfläche 25a des Anschlagabschnitts 25 steht. Die Anschlagflächen 111b und 25a begrenzen den Hub H des Bremsdrehhebels 11.

Durch die Bearbeitung der jeweiligen Anschlagfläche 111b und 25a ist es möglich, dass verschiedene Hublängen des Hubs H des Bremsdrehhebels 11 für unterschiedliche Scheibenbremsen 1 realisierbar sind. Mit anderen Worten, es können aus einem Rohteil des Bremssattels 6 mindestens zwei Bremsenvarianten hergestellt werden. Weiterhin kann hierzu an der Oberseite des Flansches 6f dessen Flanschfläche gesondert bearbeitet werden.

Die Scheibenbremse 1 in der gezeigten Ausführung als Radialbremse benötigt einen Bremsdrehhebel 11, der länger als der Montageschacht bzw. die Montageöffnung 6d ist. Daraus ergibt sich, dass der Bremsdrehhebel 11 durch die Öffnung des Zuspannabschnitts 6a, die später mit der Bodenplatte 20 verschlossen wird, in den Zuspannabschnitt 6a mit dem Hebelgehäuse 6e eingeschwenkt werden muss. Dieser Einschwenkvorgang wird dadurch begünstigt, dass der Bremsdrehhebel 11 eine gebogene, möglichst schlanke Gestalt aufweist. Dies wird vorrangig dadurch erreicht, dass die Lagerung des Bremsdrehhebels 11 mit dem Zylinderstift 26 in dem Lagerabschnitt 63 des Bremssattels 6 einen kleineren Radius besitzt als das Gegenlager mit dem Drucklagerabschnitt 115 und dem Lagersegment 25 an der Brücke 14. Der Bremsdrehhebel 11 wird unten noch ausführlicher im Zusammenhang mit Fig. 8-11 beschrieben.

In diesem Ausführungsbeispiel weist der Sattelrücken 6b des Bremssattels 6 an seiner Unterseite im Bereich der Achse (nicht gezeigt) eines zugehörigen Fahrzeugs einen deutlich größeren Freigang 19 als ein Freigang 19a an der Unterseite des Zuspannabschnitts 6a im Bereich der Außenseite der Bodenwand 61. Dabei kann der Freigang 19a eine Kontrollbearbeitung für einen maximalen Freigang der Achse bilden. Unter dem Begriff "Freigang" ist hier ein Abstand von der Achse bzw. Bremscheibenachse 2a zu der jeweiligen Unterseite des Bremssattels 6 zu verstehen.

Es ist außerdem vorgesehen, dass die Bügellager 6h, 6i des Belaghaltebügels 10 auf der Oberseite des Bremssattels 6 so angeordnet sind, dass eine Hüllkurve 21 einer Felge des zuzuordnenden Fahrzeugs berücksichtigt ist. Diese Hüllkurve 21 ist hier mit einer strichdoppelpunktierten Linie angedeutet, wobei die Hüllkurve 21 einen Innendurchmesser der Felge bedeuten soll. Der rückenseitige Endabschnitt 10b des Belaghaltebügels 10 ist in dem weiteren Bügellager 6i auf dem Sattelrücken 6b befestigt, wobei das weitere Bügellager 6i weit unterhalb der Hüllkurve 21 angeordnet ist. Die Hüllkurve 21 der Felge verläuft vom Sattelrücken 6b bis zum Beginn des Zuspannabschnitts 6a weiter in y-Richtung in parallel zur Bremsscheibenachse 2a, dann in einem Sprung ein kurzes Stück schräg nach oben und weiter parallel zur Bremsscheibenachse 2a. Angepasst an die Lage dieses Sprungs der Hüllkurve 21 ist das Bügellager 6h für den zuspannseitigen Endabschnitt 10a des Belaghaltebügels 10 an der Oberseite des Zuspannabschnitts 6a des Bremssattels 6 weiter nach rechts, also in einem Abstand zu dem Beginn des Zuspannabschnitts 6a bzw. zu dem Beginn der Deckwand 60 angeordnet. Auf diese Weise erfolgt eine einfache Anpassung an die Hüllkurve 21, wobei keine Änderungen von Felgen erforderlich sind.

Die Bügellager 6h, 6i können zur Aufnahme des jeweiligen Bügelendes 10a, 10b des Belaghaltebügels 10 Schlitze aufweisen, die in einfacher Bearbeitung, z.B. Fräsen, hergestellt werden können.

Fig. 6 und 7 stellen schematische Perspektivansichten des erfindungsgemäßen Bremssattels 6 der erfindungsgemäßen Scheibenbremse 1 nach Fig. 1 und 2 dar. In Fig. 6 ist eine Ansicht von der Zuspannseite ZS von oben gezeigt, wobei Fig. 7 eine Ansicht der Unterseite des Bremssattels 6 darstellt.

Die jeweiligen x-, y-, z-Koordinaten beziehen sich auf diejenigen in den vorhergehenden Figuren.

In Fig. 6 ist zu erkennen, dass die Oberseite des Zuspannabschnitts 6a des Bremssattels 6 von oben gesehen eine Art Dreieck bildet. Dabei ist die Grundseite dieses gedachten Dreiecks eine Linie in x-Richtung mit den Eckpunkten an den Verbindungspunkten der Zugstreben 6d mit dem Zuspannabschnitt 6a. Von diesen Eckpunkten verläuft jeweils eine gedachte Linie in Richtung auf das Hebelgehäuse 6e zu, in welchem diese gedachten Linien in einem gemeinsamen Punkt oberhalb der Bremsscheibenachse 2a schneiden.

Von der Zuspannseite ZS her gesehen, weist der Zuspannabschnitt 6a im Bereich der Verbindungen mit den Zugstreben 6c an jeder Seite eine Axiallageraufnahme 22', 22'a zur Aufnahme der Axiallager 22, 22a (Fig. 1) auf. Zwischen der linken Axiallageraufnahme 22' und dem Hebelgehäuse 6e ist eine Spindeleinheitaufnahme 23 für die Spindeleinheit 7 (Fig. 1, 3) angeordnet. Auf der anderen Seite des Hebelgehäuses 6e befindet sich eine weitere Spindeleinheitaufnahme 23a für die andere Spindeleinheit 7a (Fig. 1, 3) zwischen dem Hebelgehäuse 6e und der anderen, rechten Axiallageraufnahme 22'a.

Von den Eckpunkten der Grundseite des gedachten Dreiecks erstrecken sich auf beiden Seiten des Hebelgehäuses 6e Deckflächen 24, 24a, welche am Zuspannabschnitt 6a und am Hebelgehäuse 6e mit der Deckwand 60 verbunden sind. Die Deckflächen 24, 24a bilden auch Schutz- und Abdeckfunktionen hinsichtlich Verschmutzung der darunter liegenden Baueinheiten.

Fig. 7 verdeutlicht durch die Ansicht der Unterseite des Bremssattels 6 die Anordnung der Bodenwände 61, 61a und 65. Außerdem ist die keilförmige Einbuchtung zu erkennen, welche von der Stützwand 62, dem Lagerabschnitt 63, der schrägen Stützwand 64 und den Stützseitenwänden 66 gebildet ist.

Weiterhin ist in Fig. 6 die Innenseite des Sattelrückens 6b mit dem Druckabschnitt 18 deutlich dargestellt, wobei der Druckabschnitt 18 durch die Montageöffnung 6d vollständig sichtbar ist.

Die Seitenwände 67 des Hebelgehäuses 6e verlaufen zunächst ausgehend von der Rückwand 68 in negativer y-Richtung parallel zueinander und dann im Wesentlichen schräg in Richtung auf die Eckpunkte der Grundseite des gedachten Dreiecks hin. Dabei gehen sie in Seitenwände 67a über, welche den Konturen der verschiedenen Aufnahmen 22', 22'a und 23, 23a folgen bzw. in diese übergehen.

Der Bremssattel 6 ist als ein einstückiges Bauteil hergestellt, z.B. aus einem Metallguss. Dabei ist in einer Ausführung nur ein Kern oder es sind zwei Kerne mit Anspiegelung erforderlich.

In den Figuren 8-11 sind schematische Ansichten eines erfindungsgemäßen Bremsdrehhebels 11 der erfindungsgemäßen Scheibenbremse 1 nach Fig. 1 und 2 dargestellt.

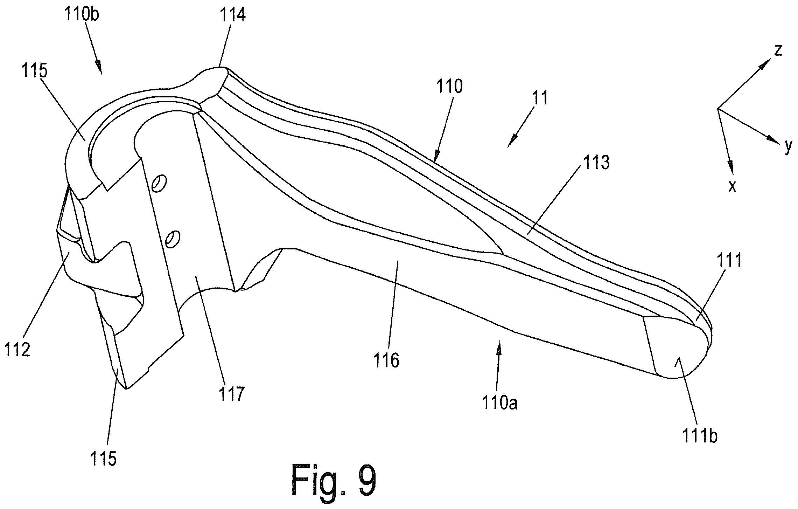

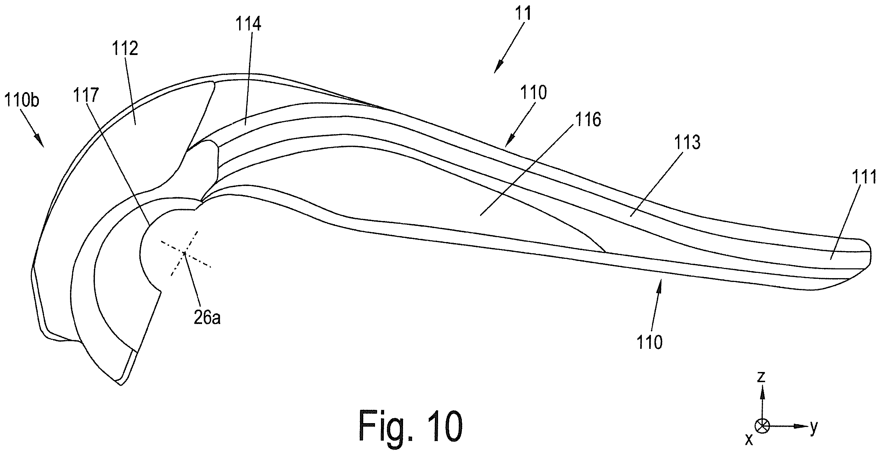

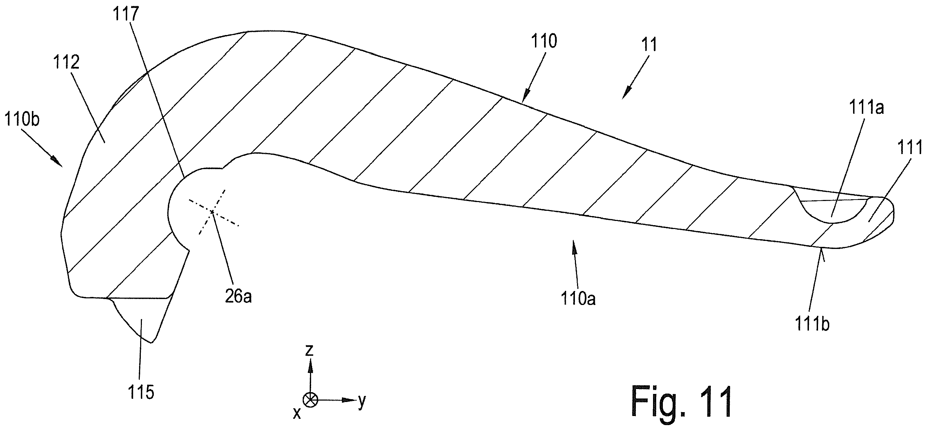

Fig. 8 zeigt eine perspektivische Ansicht von der Seite und Fig. 9 eine perspektivische Ansicht von der Unterseite des Bremsdrehhebels. In Fig. 10 ist eine Seitenansicht dargestellt und Fig. 11 zeigt eine Schnittansicht in einer vertikalen Ebene durch die Längsachse des Bremsdrehhebels 11.

Die jeweiligen x-, y-, z-Koordinaten beziehen sich auch in Fig. 8-11 auf diejenigen in den vorhergehenden Figuren.

Der Bremsdrehhebel 11 umfasst einen Hebelkörper 110 mit Seitenabschnitten 113 und mit einer Längsversteifung 116, und Drucklagerabschnitte 115.

Der Hebelkörper 110 weist einen Hebelabschnitt 110a und einen Kraftübertragungsabschnitt 110b auf, welche an der Unterseite mit der Längsversteifung 116 verbunden sind. Der Hebelabschnitt 110a beginnt hier an dem rechten Ende des Hebelkörpers 110, welches als Antriebsende 111 bezeichnet wird und leicht nach oben, d.h. in z-Richtung gebogen ist. An der Oberseite des Antriebsendes 111 ist der Antriebsabschnitt 111a eingeformt, welcher zur Zusammenwirkung mit der Kolbenstange des Druckluftzylinders oder eines anderen Krafterzeugers bestimmt ist. An der Unterseite unter dem Antriebsabschnitt 111a ist die Anschlagfläche 111b vorgesehen, welche unbearbeitet oder bearbeitet sein kann.

Der Hebelabschnitt 110a des Hebelkörpers 110 verläuft dann in negativer y-Richtung von dem Antriebsende 111 ausgehend zunächst an der Oberseite flach werdend in einem geraden Abschnitt bis zu einer Verdickung, an welcher ein Mittelsteg 12 hervortritt.

Der Hebelabschnitt 110a des Hebelkörpers 110 verläuft in seiner Breite, d.h. x-Richtung, mit beidseitigen Seitenabschnitten 113 zunächst etwa über ein Viertel der gesamten Länge des Hebelabschnitts 110a in negativer y-Richtung. Dann verbreitern sich die Seitenabschnitte 113 innerhalb ungefähr eines Viertel der Länge des Hebelabschnitts 110a jeweils im Verlauf einer Schräge in positiver und negativer x-Richtung und gehen jeweils über eine Rundung in eine bestimmte Breite über, die sich dann an der Stelle, an welcher der Mittelsteg 12 hervortritt, bis zu jeweils einem Übergang 114 jeweils in einem Bogen in positiver und negativer x-Richtung noch vergrößert.

An der Unterseite des Hebelabschnitts 110a am Beginn der Längsversteifung 116 ist die Anschlagfläche 111b in einem solchen Winkel angebracht, dass die Anschlagfläche 111b in der zugespannten Stellung (Fig. 5) parallel zu der Anschlagfläche 25a des Anschlagabschnitts 25 des Bremssattels 25 steht. Von der Anschlagfläche 111b erstreckt sich dann die Längsversteifung 116 unterhalb des Hebelabschnitts 110a in gleicher Breite wie dessen Oberseite und die der Seitenabschnitte 113. Etwa nach einem Drittel in negativer y-Richtung verläuft die Längsversteifung 116 leicht schräg nach unten, wobei ihre Breite auf beiden Seiten in einem leichten Bogen kleiner wird. Im letzten Viertel der Länge des Hebelabschnitts 110a verläuft die Längsversteifung 116 leicht nach oben, wobei sich ihre Breite auf beiden Seiten dreiecksartig vergrößert, bis sie so breit wie der Übergang 114 in x-Richtung wird.

Auf der Höhe der Übergänge 114 verläuft der hervorgetretene Mittelsteg 112 dann in einem bestimmten Radius um die Bremsdrehhebelachse 26a gegen den Uhrzeigersinn etwa in einem Halbkreis nach unten.

Beiderseits des halbkreisförmigen Mittelstegs 112 ist jeweils ein Drucklagerabschnitt 115 mit einer jeweiligen Drucklagerfläche 115a angeordnet. Der hervorgetretene Mittelsteg 112 endet jedoch nicht in einer Linie mit den Drucklagerabschnitten 115 am Ende des Halbkreises, sondern vorher in einem Abschnitt mit einer geraden Oberfläche, die dann in einem im Wesentlichen rechten Winkel in y-Richtung verläuft und in einen Freiraum zwischen den Drucklagerabschnitten 115 mündet.

In den Körper, welcher aus den Drucklagerabschnitten 115 gebildet ist, ist an der Unterseite, die mit der Längsversteifung 116 verbunden ist, eine Lageraufnahme 117 eingeformt, die sich in x-Richtung erstreckt und im Querschnitt im Wesentlichen halbkreisförmig ist. Die Lageraufnahme 117 liegt auf der Seite des Kraftübertragungsabschnitts 110b, welcher zu dem Antriebsende 111 des Hebelkörpers 110 weist, und nimmt die Lagerschale 27 auf, in welcher der Zylinderstift 26 gelagert ist (siehe Fig. 4, 5). Die Lageraufnahme 117 weist eine Mittellinie auf, welche identisch mit der Bremsdrehhebelachse 26a ist. Die Bremsdrehhebelachse 26a ist jedoch nicht der Mittelpunkt der Radien der halbkreisförmigen Drucklagerabschnitte 115, sondern liegt exzentrisch dazu. Außerdem ist der Radius der Lageraufnahme 117 wesentlich kleiner als der Durchmesser der Drucklagerflächen 115a.

Die Seitenabschnitte 113 gehen nach dem Übergang 114 jeweils über einen Werkzeugauslauf 115b in die jeweilige Drucklagerfläche 115a über. Der Werkzeugauslauf 115b ist dabei so gerundet, dass ein Mittelpunkt seiner Rundung oberhalb des Kraftübertragungsabschnitts 110b liegt.

Die Drucklagerflächen 115a sind für eine Zusammenwirkung mit jeweils einem Lagersegment 28 (Fig. 4, 5) vorgesehen, wie oben schon beschrieben ist.

Der Bremsdrehhebel 11 ist einstückig hergestellt. Die Drucklagerflächen 115a, der Mittelsteg 112 und die Lageraufnahme 117 werden durch entsprechende Bearbeitungsverfahren erzeugt, z.B. Fräsen, Schleifen.

Die oben beschriebenen Ausführungsbeispiele schränken die Erfindung nicht ein. Sie ist im Rahmen der beigefügten Ansprüche modifizierbar.

Es ist z.B. denkbar, dass der Bremsdrehhebel 11 mehrstückig, z.B. aus mindestens zwei Abschnitten hergestellt ist, wobei bei einer Mehrstückigkeit die mindestens zwei Abschnitte miteinander untrennbar verbunden sind, z.B. durch Schweißen

Weiterhin kann es möglich sein, dass die Scheibenbremse 1 nur eine Spindeleinheit 7, 7a oder mehr als zwei Spindeleinheiten 7, 7a aufweist.

Die Scheibenbremse 1 kann anstelle einer Druckluftbetätigung z.B. eine elektrische Krafterzeugung zur Betätigung aufweisen.

### Bezugszeichenliste

- 1: Scheibenbremse
- 2: Bremsscheibe
- 2a: Bremscheibenachse
- 3, 4: Reibbelag
- 3a, 4a: Bremsbelagträger
- 5: Bremsträger
- 5a, 5b; 5c, 5d: Bremsträgerhorn
- 6: Bremssattel
- 6a: Zuspannabschnitt
- 6b: Sattelrücken
- 6c: Zugstrebe
- 6d: Montageöffnung
- 6e: Hebelgehäuse
- 6f: Flansch
- 6g: Öffnung
- 6h, 6i: Bügellager
- 7, 7a: Spindeleinheit
- 8, 8a: Spindelachsen
- 9, 9a: Druckstück
- 10: Belaghaltebügel
- 10a, 10b: Endabschnitt
- 11: Bremsdrehhebel
- 12: Sensor
- 13, 13a: Gewindestange
- 14: Brücke
- 15: Nachstelleinrichtung
- 16: Synchronisationseinheit
- 17: Rückstellfeder
- 18: Druckabschnitt
- 19, 19a: Freigang
- 20: Bodenplatte
- 21: Hüllkurve
- 22, 22a: Axiallager
- 22', 22'a: Axiallageraufnahme
- 23, 23a: Spindeleinheitaufnahme
- 24, 24a: Deckabschnitt
- 25: Anschlagabschnitt
- 25a: Anschlagfläche
- 26: Zylinderstift
- 26a: Bremsdrehhebelachse
- 27: Lagerschale
- 28: Lagersegment
- 60: Deckwand
- 61, 61a, 65: Bodenwand
- 62, 64: Stützwand
- 63: Lagerabschnitt
- 63a: Lageraufnahme
- 66: Stützseitenwand
- 67, 67a: Seitenwand
- 68: Rückwand
- 69: Durchgang
- 110: Hebelkörper
- 110a: Hebelabschnitt
- 110b: Kraftübertragungsabschnitt
- 111: Antriebsende
- 111a: Antriebsabschnitt
- 111b: Anschlagfläche
- 112: Mittelsteg
- 113: Seitenabschnitt
- 114: Übergang
- 115: Drucklagerabschnitt
- 115a: Drucklagerfläche
- 115b: Werkzeugauslauf
- 116: Längsversteifung
- 117: Lageraufnahme
- α: Winkel
- H: Hub
- RS: Rückenseite
- x, y, z: Koordinaten
- ZS: Zuspannseite

## Patentansprüche

1. Scheibenbremse (1), vorzugsweise druckluftbetätigt, insbesondere für ein Kraftfahrzeug, aufweisend eine Zuspannmechanik mit einem Bremsdrehhebel (11), mindestens einer Spindeleinheit (7, 7a) mit jeweils einer in einer Brücke (14) eingeschraubten Gewindestange (13, 13a), einen Bremssattel (6), insbesondere Schiebesattel, welcher vorzugsweise rahmenartig einen Randbereich einer Bremsscheibe (2) übergreift, wobei der Bremssattel (6) einen Zuspannabschnitt (6a) und einen Sattelrücken (6b) umfasst, welche über Zugstreben (6c) miteinander verbunden sind, wobei die Zuspannmechanik mit dem Bremsdrehhebel (11) auf einer Zuspannseite (ZS) der Bremsscheibe (2) in dem Zuspannabschnitt (6a) des Bremssattels (6) aufgenommen ist, wobei der Zuspannabschnitt (6a) des Bremssattels (6) folgende Merkmale aufweist:
a) einen ersten Bereich, in welchem die Zuspannmechanik und ein Kraftübertragungsabschnitt (110b) des Bremsdrehhebels (11) angeordnet sind,
b) einen zweiten Bereich, der als ein Hebelgehäuse (6e) ausgebildet ist und einen Hebelabschnitt (110a) des Bremsdrehhebels (11) aufnimmt,
c) wobei zwischen dem ersten Bereich und dem zweiten Bereich eine Stützwand (62) mit einem Lagerabschnitt (63), welcher eine Schwenklagerung mit einer Bremsdrehhebelachse (26a), die parallel zu der Bremsscheibe (2) verläuft, für den Bremsdrehhebel (11) bildet, angeordnet ist,
wobei
d) der Zuspannabschnitt (6a) zusammen mit dem Hebelgehäuse (6e) eine gemeinsame Deckwand (60) aufweist,
e) der erste Bereich des Zuspannabschnitts (6a) mindestens eine Bodenwand (61, 61a) aufweist, die im Wesentlichen parallel zu einem Abschnitt der Deckwand (60) des Zuspannabschnitts (6a) verläuft,
**dadurch gekennzeichnet, dass**
f) der zweite Bereich des Zuspannabschnitts (6a) eine Bodenwand (65) aufweist, welche im Wesentlichen parallel zu einem weiteren Abschnitt der Deckwand (60) des Zuspannabschnitts (6a) verläuft, wobei
g) die Stützwand (62) mit einer schrägen Stützwand (64) verbunden ist, wobei sich die schräge Stützwand (64) von der Bremsscheibe (2) wegweisend in Richtung auf eine Bremsscheibenachse (2a) geneigt erstreckt und mit der Bodenwand (65) des zweiten Bereichs verbunden ist, und
h) die schräge Stützwand (64) mit der Bodenwand (65) einen Winkel (α) bildet, dessen Wert ungleich 0° ist und 30° beträgt.

2. Scheibenbremse (1) nach Anspruch 1 **dadurch gekennzeichnet, dass** zwei oder mehr Spindeleinheiten (7, 7a) mit jeweils einer in der Brücke (14) eingeschraubten Gewindestange (13, 13a) vorgesehen sind.

3. Scheibenbremse (1) nach einem der vorhergehenden Ansprüche, **dadurch gekennzeichnet, dass** die Stützwand (62) parallel zu der Bremsscheibe (2) und verbunden mit der mindestens einen Bodenwand (61, 61a) angeordnet ist.

4. Scheibenbremse (1) nach einem der vorhergehenden Ansprüche, **dadurch gekennzeichnet, dass** zwischen dem Lagerabschnitt (63) der Stützwand (62) und der Innenseite der Deckwand (60) ein Durchgang (69) zwischen dem ersten Bereich und dem zweiten Bereich des Zuspannabschnitts (6a) vorgesehen ist.

5. Scheibenbremse (1) nach einem der vorhergehenden Ansprüche, **dadurch gekennzeichnet, dass** der weitere Abschnitt der Deckwand (60) des Zuspannabschnitts (6a) im zweiten Bereich im Endbereich des Hebelgehäuses (6e) einen Flansch (6f) mit einer Öffnung (6g) zur Befestigung eines Kraftantriebs für die Scheibenbremse (1) aufweist.

6. Scheibenbremse (1) nach Anspruch 5, **dadurch gekennzeichnet, dass** die Bodenwand (65) des Hebelgehäuses (6e) an ihrer Innenseite einen zu der Innenseite des Hebelgehäuses (6e) hervorstehenden Anschlagabschnitt (25) mit einer Anschlagfläche (25a) aufweist, welche unterhalb der Öffnung (6g) des Flansches (6f) angeordnet ist.

7. Scheibenbremse (1) nach einem der vorhergehenden Ansprüche, **dadurch gekennzeichnet, dass** der zweite Bereich des Zuspannabschnitt (6a) des Bremssattels (6) eine Rückwand (68) aufweist, welche parallel zu der Stützwand (62) angeordnet ist.

8. Scheibenbremse (1) nach einem der vorhergehenden Ansprüche, **dadurch gekennzeichnet, dass** sich ein Querschnitt des Hebelgehäuses (6e) in Längsrichtung in Richtung auf die Bremsscheibe (2) beginnend an der Verbindung der schrägen Stützwand (64) mit der Bodenwand (65) bis zu der Stützwand (62) bzw. zu dem Durchgang (69) verjüngt.

9. Scheibenbremse (1) nach einem der vorhergehenden Ansprüche, **dadurch gekennzeichnet, dass** der Bremsdrehhebel (11) eine gebogene, schlanke Gestalt in seiner Längsrichtung mit einem Hebelkörper (110) mit Seitenabschnitten (113), einer Längsversteifung (116) und mindestens einem Drucklagerabschnitt (115) aufweist.

10. Scheibenbremse (1) nach Anspruch 9, **dadurch gekennzeichnet, dass** der Hebelkörper (110) des Bremsdrehhebels (11) einen Hebelabschnitt (110a) und einen Kraftübertragungsabschnitt (110b) aufweist, welche an der Unterseite des Hebelkörpers (110) mit der Längsversteifung (116) verbunden sind.

11. Scheibenbremse (1) nach Anspruch 10, **dadurch gekennzeichnet, dass** der Hebelabschnitt (110a) ein Antriebsende (111) aufweist, welches an einer Oberseite einen Antriebsabschnitt (111a) zur Zusammenwirkung mit einer Kolbenstange eines Krafterzeugers bestimmt ist, und wobei das Antriebsende (111) an der Unterseite, welche dem Antriebsabschnitt (111a) gegenüber liegt, eine Anschlagfläche (111b) aufweist.

12. Scheibenbremse (1) nach Anspruch 11, **dadurch gekennzeichnet, dass** der Kraftübertragungsabschnitt (110b) des Hebelkörpers (110) einen in etwa halbkreisförmigen Mittelsteg (112) aufweist, an den beiderseits jeweils ein halbkreisförmiger Drucklagerabschnitt (115) mit einer jeweiligen Drucklagerfläche (115a) angeordnet ist, wobei der Mittelsteg (112) von den Drucklagerabschnitten (115) hervorsteht.

13. Scheibenbremse (1) nach Anspruch 12, **dadurch gekennzeichnet, dass** der von den Drucklagerabschnitten (115) hervorstehende Mittelsteg (112) in einer Führung der Brücke (14) aufgenommen ist, wodurch eine formschlüssige Hebelführung des Bremsdrehhebels (11) in Richtung der Bremsdrehhebelachse (26a) gebildet ist.

14. Scheibenbremse (1) nach Anspruch 12 oder 13, **dadurch gekennzeichnet, dass** an der den Drucklagerflächen (115a) der Drucklagerabschnitte (115) gegenüberliegenden Seite eine Lageraufnahme (117) mit einem in etwa halbkreisförmigen Querschnitt eingeformt ist, wobei die Lageraufnahme (117) eine Mittellinie aufweist, welche mit der Bremsdrehhebelachse (26a) identisch ist.

15. Scheibenbremse (1) nach Anspruch 14, **dadurch gekennzeichnet, dass** die Mittellinie der Lageraufnahme (117) exzentrisch zu einem Mittelpunkt der Radien der halbkreisförmigen Drucklagerflächen (115a) der Drucklagerabschnitte (115) angeordnet ist.

16. Scheibenbremse (1) nach Anspruch 15, **dadurch gekennzeichnet, dass** ein Radius der Lageraufnahme (117) kleiner, beispielsweise etwa 0,6...0,4-mal kleiner, als ein Radius der Drucklagerflächen (115a) der Drucklagerabschnitte (115) ist.

17. Scheibenbremse (1) nach einem der vorhergehenden Ansprüche, **dadurch gekennzeichnet, dass** der Bremssattel (6) einstückig ausgebildet ist.

18. Scheibenbremse (1) nach einem der vorhergehenden Ansprüche, weiterhin aufweisend eine Nachstelleinrichtung (15).

19. Scheibenbremse (1) nach einem der vorhergehenden Ansprüche, **dadurch gekennzeichnet, dass** die Scheibenbremse (1) als eine Radialbremse ausgebildet ist.

20. Bremssattel (6), insbesondere Schiebesattel, einer Scheibenbremse (1) nach einem der Ansprüche 1 bis 8, umfassend einen Zuspannabschnitt (6a) und einen Sattelrücken (6b), welche über Zugstreben (6c) miteinander verbunden sind, wobei der Zuspannabschnitt (6a) des Bremssattels (6) folgende Merkmale aufweist:
a) einen ersten Bereich, der eine Aufnahme für eine Zuspannmechanik und einen Kraftübertragungsabschnitt (110b) eines Bremsdrehhebels (11) nach einem der Ansprüche 9 bis 16 der zuzuordnende Scheibenbremse (1) bildet,
b) einen zweiten Bereich, der als ein Hebelgehäuse (6e) ausgebildet ist und eine Aufnahme für einen Hebelabschnitt (110a) des Bremsdrehhebels (11) der zuzuordnenden Scheibenbremse (1) bildet,
c) wobei zwischen dem ersten Bereich und dem zweiten Bereich eine Stützwand (62) mit einem Lagerabschnitt (63) angeordnet ist,
wobei
d) der Zuspannabschnitt (6a) zusammen mit dem Hebelgehäuse (6e) eine gemeinsame Deckwand (60) aufweist,
e) der erste Bereich des Zuspannabschnitts (6a) mindestens eine Bodenwand (61, 61a) aufweist, die im Wesentlichen parallel zu einem Abschnitt der Deckwand (60) des Zuspannabschnitts (6a) verläuft,
**dadurch gekennzeichnet, dass**
f) der zweite Bereich des Zuspannabschnitts (6a) eine Bodenwand (65) aufweist, welche im Wesentlichen parallel zu einem weiteren Abschnitt der Deckwand (60) des Zuspannabschnitts (6a) verläuft, wobei
g) die Stützwand (62) mit einer schrägen Stützwand (64) verbunden ist, wobei sich die schräge Stützwand (64) von der Bremsscheibe (2) der zuzuordnenden Scheibenbremse (1) wegweisend in Richtung auf eine Bremsscheibenachse (2a) der zuzuordnenden Scheibenbremse (1) geneigt erstreckt und mit der Bodenwand (65) des zweiten Bereichs verbunden ist, und
h) die schräge Stützwand (64) mit der Bodenwand (65) einen Winkel (α) bildet, dessen Wert ungleich 0° ist und 30° beträgt.

21. Bremssattel (6) nach Anspruch 20, **dadurch gekennzeichnet, dass** der Bremssattel (6) einstückig ausgebildet ist.

22. Bremssattel (6) nach Anspruch 20 oder 21, **dadurch gekennzeichnet, dass** der Bremssattel (6) als ein Schiebesattel ausgebildet ist.

23. Bremsdrehhebel (11) einer Scheibenbremse (1) nach einem der Ansprüche 1 bis 8 oder 17 bis 19,
aufweisend eine Zuspannmechanik mit dem Bremsdrehhebel (11), mindestens einer Spindeleinheit (7, 7a) mit jeweils einer in einer Brücke (14) eingeschraubten Gewindestange (13, 13a), einen Bremssattel (6), insbesondere Schiebesattel, welcher vorzugsweise rahmenartig einen Randbereich einer Bremsscheibe (2) übergreift, wobei der Bremssattel (6) einen Zuspannabschnitt (6a) und einen Sattelrücken (6b) umfasst, welche über Zugstreben (6c) miteinander verbunden sind, wobei die Zuspannmechanik mit dem Bremsdrehhebel (11) auf einer Zuspannseite (ZS) der Bremsscheibe (2) in dem Zuspannabschnitt (6a) des Bremssattels (6) aufgenommen ist, wobei der Zuspannabschnitt (6a) des Bremssattels (6) folgende Merkmale aufweist:
a) einen ersten Bereich, in welchem die Zuspannmechanik und ein Kraftübertragungsabschnitt (110b) des Bremsdrehhebels (11) angeordnet sind,
b) einen zweiten Bereich, der als ein Hebelgehäuse (6e) ausgebildet ist und einen Hebelabschnitt (110a) des Bremsdrehhebels (11) aufnimmt,
c) wobei zwischen dem ersten Bereich und dem zweiten Bereich eine Stützwand (62) mit einem Lagerabschnitt (63), welcher eine Schwenklagerung mit einer Bremsdrehhebelachse (26a), die parallel zu der Bremsscheibe (2) verläuft, für den Bremsdrehhebel (11) bildet, angeordnet ist,
wobei
d) der Zuspannabschnitt (6a) zusammen mit dem Hebelgehäuse (6e) eine gemeinsame Deckwand (60) aufweist,
e) der erste Bereich des Zuspannabschnitts (6a) mindestens eine Bodenwand (61, 61a) aufweist, die im Wesentlichen parallel zu einem Abschnitt der Deckwand (60) des Zuspannabschnitts (6a) verläuft,
wobei
f) der zweite Bereich des Zuspannabschnitts (6a) eine Bodenwand (65) aufweist, welche im Wesentlichen parallel zu einem weiteren Abschnitt der Deckwand (60) des Zuspannabschnitts (6a) verläuft, wobei
g) die Stützwand (62) mit einer schrägen Stützwand (64) verbunden ist, wobei sich die schräge Stützwand (64) von der Bremsscheibe (2) wegweisend in Richtung auf eine Bremsscheibenachse (2a) geneigt erstreckt und mit der Bodenwand (65) des zweiten Bereichs verbunden ist, und
h) die schräge Stützwand (64) mit der Bodenwand (65) einen Winkel (α) bildet, dessen Wert ungleich 0° ist und 30° beträgt.
**dadurch gekennzeichnet, dass**
der Bremsdrehhebel (11) eine gebogene, schlanke Gestalt in seiner Längsrichtung mit einem Hebelkörper (110) mit Seitenabschnitten (113), einer Längsversteifung (116) und mindestens einem Drucklagerabschnitt (115) aufweist.

24. Bremsdrehhebel (11) nach Anspruch 23, **dadurch gekennzeichnet, dass** der Hebelkörper (110) des Bremsdrehhebels (11) einen Hebelabschnitt (110a) und einen Kraftübertragungsabschnitt (110b) aufweist, welche an der Unterseite des Hebelkörpers (110) mit der Längsversteifung (116) verbunden sind.

25. Bremsdrehhebel (11) nach Anspruch 24, **dadurch gekennzeichnet, dass** der Hebelabschnitt (110a) ein Antriebsende (111) aufweist, welches an einer Oberseite einen Antriebsabschnitt (111a) zur Zusammenwirkung mit einer Kolbenstange eines Krafterzeugers bestimmt ist, und wobei das Antriebsende (111) an der Unterseite, welche dem Antriebsabschnitt (111a) gegenüber liegt, eine Anschlagfläche (111b) aufweist.

26. Bremsdrehhebel (11) nach Anspruch 25, **dadurch gekennzeichnet, dass** der Kraftübertragungsabschnitt (110b) des Hebelkörpers (110) einen in etwa halbkreisförmigen Mittelsteg (112) aufweist, an den beiderseits jeweils ein halbkreisförmiger Drucklagerabschnitt (115) mit einer jeweiligen Drucklagerfläche (115a) angeordnet ist, wobei der Mittelsteg (112) von den Drucklagerabschnitten (115) hervorsteht.

27. Bremsdrehhebel (11) nach Anspruch 26, **dadurch gekennzeichnet, dass** der von den Drucklagerabschnitten (115) hervorstehende Mittelsteg (112) zur Aufnahme in einer Führung einer Brücke (14) der zuzuordnenden Scheibenbremse (1) bestimmt ist, wodurch eine formschlüssige Hebelführung des Bremsdrehhebels (11) in Richtung einer Bremsdrehhebelachse (26a) der zuzuordnende Scheibenbremse (1) gebildet ist.

28. Bremsdrehhebel (11) nach Anspruch 26 oder 27, **dadurch gekennzeichnet, dass** an der den Drucklagerflächen (115a) der Drucklagerabschnitte (115) gegenüberliegenden Seite eine Lageraufnahme (117) mit einem in etwa halbkreisförmigen Querschnitt eingeformt ist, wobei die Lageraufnahme (117) eine Mittellinie aufweist, welche mit der Bremsdrehhebelachse (26a) der zuzuordnende Scheibenbremse (1) identisch ist.

29. Bremsdrehhebel (11) nach Anspruch 28, **dadurch gekennzeichnet, dass** die Mittellinie der Lageraufnahme (117) exzentrisch zu einem Mittelpunkt der Radien der halbkreisförmigen Drucklagerflächen (115a) der Drucklagerabschnitte (115) angeordnet ist.

30. Bremsdrehhebel (11) nach Anspruch 30, **dadurch gekennzeichnet, dass** ein Radius der Lageraufnahme (117) kleiner, beispielsweise etwa 0,6...0,4-mal kleiner, als ein Radius der Drucklagerflächen (115a) der Drucklagerabschnitte (115) ist.

## Claims

1. Disc brake, preferably actuated pneumatically, in particular for a motor vehicle, comprising a brake application mechanism with a brake rotary lever (11), at least one spindle unit (7, 7a), each of them having a threaded rod (13, 13a) screwed into a bridge (14), a brake calliper (6), especially a sliding calliper, which preferably covers an edge region of a brake disc (2) in the manner of a frame, wherein the brake calliper (6) comprises a brake application portion (6a) and a calliper back (6b), which are connected to each other by tie bars (6c), wherein the brake application mechanism with the brake rotary lever (11) is accommodated on an application face (ZS) of the brake disc (2) in the brake application portion (6a) of the brake calliper (6), wherein the brake application portion (6a) of the brake calliper (6) has the following features:
a) a first region in which the brake application mechanism and a force transmission portion (110b) of the brake rotary lever (11) are located,
b) a second region which is designed as a lever housing (6e) and accommodates a lever portion (110a) of the brake rotary lever (11),
c) wherein between the first region and the second region there is arranged a support wall (62) with a bearing portion (63), forming a pivot bearing with a brake rotary lever axis (26a) running parallel to the brake disc (2), for the brake rotary lever (11),
wherein
d) the brake application portion (6a) together with the lever housing (6e) has a common top wall (60),
e) the first region of the brake application portion (6a) has at least one bottom wall (61, 61a) which runs substantially parallel to a portion of the top wall (60) of the brake application portion (6a),
**characterised in that**
f) the second region of the brake application portion (6a) has a bottom wall (65), which runs substantially parallel to a further portion of the top wall (60) of the brake application portion (6a), wherein
g) the support wall (62) is connected to a slanted support wall (64), the slanted support wall (64) extending away from the brake disc (2) at an inclination in the direction of a brake disc axis (2a) and being connected to the bottom wall (65) of the second region, and
h) the slanted support wall (64) forms an angle (α) with the bottom wall (65) whose value is not equal to 0° and is 30°.

2. Disc brake (1) according to claim 1, **characterised in that** two or more spindle units (7, 7a) are provided, each of them having a threaded rod (13, 13a) screwed into the bridge (14).

3. Disc brake (1) according to any of the preceding claims, **characterised in that** the support wall (62) is arranged parallel to the brake disc (2) and so as to be connected to the at least one bottom wall (61, 61a).

4. Disc brake (1) according to any of the preceding claims, **characterised in that** a passageway (69) between the first region and the second region of the brake application portion (6a) is provided between the bearing portion (63) of the support wall (62) and the inside of the top wall (60).

5. Disc brake (1) according to any of the preceding claims, **characterised in that** the additional portion of the top wall (60) of the brake application portion (6a) has a flange (6f), in the second region in the end region of the lever housing (6e), with an opening (6g) for the attachment of a power drive for the disc brake (1).

6. Disc brake (1) according to claim 5, **characterised in that** the bottom wall (65) of the lever housing (6e) has, on its inside, an end stop portion (25) with an end stop surface (25a) projecting toward the interior of the lever housing (6e), said end stop surface being arranged beneath the opening (6g) of the flange (6f).

7. Disc brake (1) according to any of the preceding claims, **characterised in that** the second region of the brake application portion (6a) of the brake calliper (6) has a rear wall (68), which is arranged parallel to the support wall (62).

8. Disc brake (1) according to any of the preceding claims, **characterised in that** a cross section of the lever housing (6e) tapers in the longitudinal direction toward the brake disc (2) starting at the connection of the slanted support wall (64) to the bottom wall (65) and as far as the support wall (62) or the passageway (69).

9. Disc brake (1) according to any of the preceding claims, **characterised in that** the brake rotary lever (11) has a curved, slender shape in its longitudinal direction with a lever body (110) having side portions (113), a longitudinal stiffening (116), and at least one thrust bearing portion (115).

10. Disc brake (1) according to claim 9, **characterised in that** lever body (110) of the brake rotary lever (11) has a lever portion (110a) and a force transmission portion (110b), which are connected at the bottom side of the lever body (110) to the longitudinal stiffening (116).

11. Disc brake (1) according to claim 10, **characterised in that** the lever portion (110a) has a driving end (111), which is designed at a top side a driving portion (111a) for interaction with a piston rod of a force generating element, and **in that** the driving end (111) has an end stop surface (111b) at the bottom side lying opposite the driving portion (111a).

12. Disc brake (1) according to claim 11, **characterised in that** the force transmission portion (110b) of the lever body (110) has a roughly semicircular middle web (112), on either side of which is arranged a semicircular thrust bearing portion (115) with a respective thrust bearing surface (115a), the middle web (112) protruding from the thrust bearing portions (115).

13. Disc brake (1) according to claim 12, **characterised in that** the middle web (112) protruding from the thrust bearing portions (115) is accommodated in a guide of the bridge (14), thus forming a positive lever guide of the brake rotary lever (11) in the direction of the brake rotary lever axis (26a).

14. Disc brake (1) according to claim 12 or 13, **characterised in that** on the side opposite the thrust bearing surfaces (115a) of the thrust bearing portions (115) there is formed a bearing seat (117) with a roughly semicircular cross section, the bearing seat (117) having a centre line which is identical to the brake rotary lever axis (26a).

15. Disc brake (1) according to claim 14, **characterised in that** the centre line of the bearing seat (117) is arranged off centre from a midpoint of the radii of the semicircular thrust bearing surfaces (115a) of the thrust bearing portions (115).

16. Disc brake (1) according to claim 15, **characterised in that** a radius of the bearing seat (117) is smaller than a radius of the thrust bearing surfaces (115a) of the thrust bearing portions (115), for example around 0.6 to 0.4 times smaller.

17. Disc brake (1) according to any of the preceding claims, **characterised in that** the brake calliper (6) is designed as a single piece.

18. Disc brake (1) according to any of the preceding claims, furthermore comprising an adjustment device (15).

19. Disc brake (1) according to any of the preceding claims, **characterised in that** the disc brake (1) is designed as a radial brake.

20. Brake calliper (6), in particular sliding calliper, of a disc brake according to any of claims 1 to 8, comprising a brake application portion (6a) and a calliper back (6b), which are connected to each other by tie bars (6c), wherein the brake application portion (6a) of the brake calliper (6) has the following features:
a) a first region forming a receptacle for a brake application mechanism and a force transmission portion (110b) of a brake rotary lever (11) according to any of claims 9 to 16 of the associated disc brake (1),
b) a second region which is designed as a lever housing (6e) and forms a receptacle for a lever portion (110a) of the brake rotary lever (11) of the associated disc brake (1),
c) wherein between the first region and the second region there is arranged a support wall (62) with a bearing portion (63),
wherein
d) the brake application portion (6a) together with the lever housing (6e) has a common top wall (60),
e) the first region of the brake application portion (6a) has at least one bottom wall (61, 61a) which runs substantially parallel to a portion of the top wall (60) of the brake application portion (6a),
**characterised in that**
f) the second region of the brake application portion (6a) has a bottom wall (65), which runs substantially parallel to a further portion of the top wall (60) of the brake application portion (6a), wherein
g) the support wall (62) is connected to a slanted support wall (64), the slanted support wall (64) extending away from the brake disc (2) if the associated disc brake (1) at an inclination in the direction of a brake disc axis (2a) of the associated disc brake (1) and being connected to the bottom wall (65) of the second region, and
h) the slanted support wall (64) forms an angle (α) with the bottom wall (65) whose value is not equal to 0° and is 30°.

21. Brake calliper (6) according to claim 20. **characterised in that** the brake calliper (6) is designed as a single piece.

22. Brake calliper (6) according to claim 20 or 21. **characterised in that** the brake calliper (6) is designed as a sliding calliper.

23. Brake rotary lever (11) of a disc brake (1) according to any of claims 1 to 8 or 17 to 19,
having a brake application mechanism with the brake rotary lever (11), at least one spindle unit (7, 7a), each of them having a threaded rod (13, 13a) screwed into a bridge (14), a brake calliper (6), especially a sliding calliper, which preferably covers an edge region of a brake disc (2) in the manner of a frame, wherein the brake calliper (6) comprises a brake application portion (6a) and a calliper back (6b), which are connected to each other by tie bars (6c), wherein the brake application mechanism with the brake rotary lever (11) is accommodated on an application face (ZS) of the brake disc (2) in the brake application portion (6a) of the brake calliper (6), wherein the brake application portion (6a) of the brake calliper (6) has the following features:
a) a first region in which the brake application mechanism and a force transmission portion (110b) of the brake rotary lever (11) are located,
b) a second region which is designed as a lever housing (6e) and accommodates a lever portion (110a) of the brake rotary lever (11),
c) wherein between the first region and the second region there is arranged a support wall (62) with a bearing portion (63), forming a pivot bearing with a brake rotary lever axis (26a) running parallel to the brake disc (2), for the brake rotary lever (11),
wherein
d) the brake application portion (6a) together with the lever housing (6e) has a common top wall (60),
e) the first region of the brake application portion (6a) has at least one bottom wall (61, 61a) which runs substantially parallel to a portion of the top wall (60) of the brake application portion (6a),
wherein
f) the second region of the brake application portion (6a) has a bottom wall (65), which runs substantially parallel to a further portion of the top wall (60) of the brake application portion (6a), wherein
g) the support wall (62) is connected to a slanted support wall (64), the slanted support wall (64) extending away from the brake disc (2) at an inclination in the direction of a brake disc axis (2a) and being connected to the bottom wall (65) of the second region, and
h) the slanted support wall (64) forms an angle (α) with the bottom wall (65) whose value is not equal to 0° and is 30°,
**characterised in that**
the brake rotary lever (11) has a curved, slender shape in its longitudinal direction with a lever body (110) having side portions (113), a longitudinal stiffening (116), and at least one thrust bearing portion (115).

24. Brake rotary lever (11) according to claim 23, **characterised in that** the lever body has a lever portion (110a) and a force transmission portion (110b), which are connected at the bottom side of the lever body (110) to the longitudinal stiffening (116).

25. Brake rotary lever (11) according to claim 24, **characterised in that** the lever portion (110a) has a driving end (111), which is designed at a top side a driving portion (111a) for interaction with a piston rod of a force generating element, and **in that** the driving end (111) has an end stop surface (111b) at the bottom side lying opposite the driving portion (111a).

26. Brake rotary lever (11) according to claim 25, **characterised in that** the force transmission portion (110b) of the lever body (110) has a roughly semicircular middle web (112), on either side of which is arranged a semicircular thrust bearing portion (115) with a respective thrust bearing surface (115a), the middle web (112) protruding from the thrust bearing portions (115).

27. Brake rotary lever (11) according to claim 26, **characterised in that** the middle web (112) protruding from the thrust bearing portions (115) is designed for accommodation in a guide of the bridge (14) of the associated disc brake (1), thus forming a positive lever guide of the brake rotary lever (11) in the direction of the brake rotary lever axis (26a) of the associated disc brake (1).

28. Brake rotary lever (11) according to claim 26 or 27, **characterised in that** on the side opposite the thrust bearing surfaces (115a) of the thrust bearing portions (115) there is formed a bearing seat (117) with a roughly semicircular cross section, the bearing seat (117) having a centre line which is identical to the brake rotary lever axis (26a) of the associated disc brake (1).

29. Brake rotary lever (11) according to claim 28, **characterised in that** the centre line of the bearing seat (117) is arranged off centre from a midpoint of the radii of the semicircular thrust bearing surfaces (115a) of the thrust bearing portions (115).

30. Brake rotary lever (11) according to claim 29, **characterised in that** a radius of the bearing seat (117) is smaller than a radius of the thrust bearing surfaces (115a) of the thrust bearing portions (115), for example around 0.6 to 0.4 times smaller.

## Revendications

1. Frein (1) à disque, de préférence à actionnement à air comprimé, notamment pour un véhicule automobile, comportant un mécanisme de serrage ayant un levier (11) tournant de frein, au moins une unité (7, 7a) de broche ayant chacune une tige (13, 13a) filetée vissée dans un pontet (14), un étrier (6) de frein, notamment un étrier coulissant, qui recouvre, de préférence à la manière d'un cadre, une partie de bord d'un disque (2) de frein, l'étrier (6) de frein comprenant une partie (6a) de serrage et un dos (6b) d'étrier, qui sont reliés entre eux par des tirants (6c), le mécanisme de serrage étant, avec le levier (11) tournant de frein, reçu sur une face (ZS) de serrage du disque (2) de frein dans la partie (6a) de serrage de l'étrier (1) de frein, la partie (6a) de serrage de l'étrier (6) de frein ayant les caractéristiques suivantes :
a) une première région dans laquelle le mécanisme (2) de serrage et une partie (110b) de transmission de force du levier (11) tournant de frein sont disposés,
b) une deuxième région qui est constituée en boîtier (6e) du levier et qui reçoit une partie (110a) du levier (11) tournant de frein,
c) dans lequel, entre la première région et la deuxième région, est disposée une paroi (62) d'appui ayant une partie (63) de palier qui forme, pour le levier (11) tournant de frein, un montage pivotant ayant un axe (26a) de levier tournant de frein s'étendant parallèlement au disque (2) de frein,
dans lequel
d) la partie (6a) de serrage a, ensemble avec le boîtier (6e) du levier, une paroi (60) commune de couverture,
e) la première région de la partie (6a) de serrage a au moins une paroi (61, 61a) de fond qui s'étend sensiblement parallèlement à une partie de la paroi (60) de couverture de la partie (6a) de serrage,
**caractérisé en ce que**
f) la deuxième région de la partie (6a) de serrage a une paroi (65) de fond, qui s'étend sensiblement parallèlement à une autre partie de la paroi (60) de couverture de la partie (6a) de serrage, dans lequel
g) la paroi (62) d'appui est reliée à une paroi (64) d'appui inclinée, la paroi (64) d'appui inclinée s'étendant de manière inclinée en s'éloignant du disque (2) de frein en direction d'un axe (2a) du disque de frein et étant reliée à la paroi (65) de fond de la deuxième région, et
h) la paroi (64) d'appui inclinée fait, avec la paroi (65) de fond, un angle (α) dont la valeur n'est pas égale à 0° et se monte à 30°.

2. Frein (1) à disque suivant la revendication 1, **caractérisé en ce qu'**il est prévu deux ou plusieurs unités (7, 7a) de broche ayant chacune une tige (13, 13a) filetée vissée dans le pontet (14).

3. Frein (1) à disque suivant l'une des revendications précédentes, **caractérisé en ce que** la paroi (62) d'appui est disposée parallèlement au disque (2) de frein et est reliée à la au moins une paroi (61, 61a) de fond.

4. Frein (1) à disque suivant l'une des revendications précédentes, **caractérisé en ce qu'**entre la partie (63) de palier de la paroi (62) d'appui et la face intérieure de la paroi (60) de couverture, est prévu un passage (69) entre la première région et la deuxième région de la partie (6a) de serrage.

5. Frein (1) à disque suivant l'une des revendications précédentes, **caractérisé en ce que** l'autre partie de la paroi (60) de couverture de la partie (6a) de serrage a, dans la deuxième région dans la région d'extrémité du boîtier (6e) du levier, une bride (6f) ayant une ouverture (6g) pour la fixation d'un entraînement mécanique du frein (1) à disque.

6. Frein (1) à disque suivant la revendication 5, **caractérisé en ce que** la paroi (65) de fond du boîtier (6e) du levier a sur sa face intérieure une partie (25) de butée qui est en saillie de la face intérieure du boîtier (6e) du levier et qui a une surface (25a) de butée disposée en dessous de l'ouverture (6g) de la bride (6f).

7. Frein (1) à disque suivant l'une des revendications précédentes, **caractérisé en ce que** la deuxième région de la partie (6a) de serrage de l'étrier (6) de frein a une paroi (68) arrière disposée parallèlement à la paroi (62) d'appui.

8. Frein (1) à disque suivant l'une des revendications précédentes, **caractérisé en ce qu'**une section transversale du boîtier (6e) du levier, en commençant dans la direction longitudinale en direction du disque (2) de frein, se rétrécit à la liaison de la paroi (64) d'appui inclinée à la paroi (65) de fond jusqu'à la paroi (62) d'appui ou jusqu'au passage (69).

9. Frein (1) à disque suivant l'une des revendications précédentes, **caractérisé en ce que** le levier (11) tournant de frein a une forme incurvée élancée dans sa direction longitudinale en ayant un corps (10) de levier ayant des parties (113) latérales, un renforcement (116) longitudinal et au moins une partie (115) de palier de poussée.

10. Frein (1) à disque suivant la revendication 9, **caractérisé en ce que** le corps (110) du levier (11) tournant de frein a une partie (110a) de levier et une partie (110b) de transmission de force qui, au côté inférieur du corps (110) du levier, sont reliées au renforcement (116) longitudinal.

11. Frein (1) à disque suivant la revendication 10, **caractérisé en ce que** la partie (110a) de levier a une extrémité (111) d'entraînement qui, à un côté supérieur de la partie (111a) d'entraînement, est destinée à coopérer avec une tige de piston d'un producteur de force et dans lequel l'extrémité (111) d'entraînement a, au côté inférieur opposé à la partie (111a) d'entraînement, une surface (111b) de butée.

12. Frein (1) à disque suivant la revendication 11, **caractérisé en ce que** la partie (110b) de transmission de force du corps (110) du levier a une nervure (112) médiane à peu près hémicirculaire sur les deux côtés de laquelle est disposée, respectivement, une partie (115) hémicirculaire de palier de poussée ayant une surface (115a) respective de palier de poussée, la nervure (112) médiane étant en saillie des parties (115) de palier de poussée.

13. Frein (1) à disque suivant la revendication (12), **caractérisé en ce que** la nervure (112) médiane en saillie des parties (115) de palier de poussée est reçue dans un guidage du pontet (14), grâce à quoi il est formé un guidage à complémentarité de forme du levier (11) tournant de frein dans la direction de l'axe (26a) du levier tournant de frein.

14. Frein (1) à disque suivant la revendication 12 ou 13, **caractérisé en ce que**, du côté opposé aux surfaces (115a) de palier de poussée des parties (115) de palier de poussée, est formé un logement (117) de palier ayant une section transversale à peu près hémicirculaire, le logement (117) de palier ayant une ligne médiane qui est la même que l'axe (26a) du levier tournant de frein.

15. Frein (1) à disque suivant la revendication 14, **caractérisé en ce que** la ligne médiane du logement (117) de palier est excentré par rapport à un centre des rayons des surfaces (115a) hémicirculaires de palier de poussée des parties (115) de palier de poussée.

16. Frein (1) à disque suivant la revendication 15, **caractérisé en ce qu'**un rayon du logement (117) de palier est plus petit, par exemple de 0,6 à 0,4 fois environ plus petit, qu'un rayon des surfaces (115a) de palier de poussée des parties (115) de palier de poussée.

17. Frein (1) à disque suivant l'une des revendications précédentes, **caractérisé en ce que** l'étrier (6) de frein est constitué d'une seule pièce.

18. Frein (1) à disque suivant l'une des revendications précédente, comprenant, en outre, un dispositif (15) de rattrapage de jeu.

19. Frein (1) à disque suivant l'une des revendications précédentes, **caractérisé en ce que** le frein (1) à disque est constitué en frein radial.

20. Etrier (6) de frein, notamment étrier coulissant, d'un frein (1) à disque suivant l'une des revendications 1 à 8, comprenant une partie (6a) de serrage et un dos (6b) d'étrier qui sont reliés entre eux par des tirants (6c), la partie (6a) de serrage de l'étrier (1) de frein ayant les caractéristiques suivantes :
a) une première région qui forme un logement pour un mécanisme de serrage et une partie (110b) de transmission de force d'un levier (11) tournant de frein suivant l'une des revendications 9 à 16 du frein (1) à disque associé,
b) une deuxième région qui est constituée en boîtier (6e) du levier et qui forme un logement pour une partie (110a) du levier (11) tournant de frein du frein (1) à disque associé,
c) dans lequel une paroi (62) d'appui ayant une partie (63) de palier est disposée entre la première région et la deuxième région,
dans lequel
d) la partie (6a) de serrage a, ensemble avec le boîtier (6e) du levier, une paroi (60) commune de couverture,
e) la première région de la partie (6a) de serrage a au moins une paroi (61, 61a) de fond qui s'étend sensiblement parallèlement à une partie de la paroi (60) de couverture de la partie (6a) de serrage,
**caractérisé en ce que**
f) la deuxième région de la partie (6a) de serrage a une paroi (65) de fond, qui s'étend sensiblement parallèlement à une autre partie de la paroi (60) de couverture de la partie (6a) de serrage, dans lequel
g) la paroi (62) d'appui est reliée à une paroi (64) d'appui inclinée, la paroi (64) d'appui inclinée s'étendant de manière inclinée en s'éloignant du disque (2) de frein en direction d'un axe (2a) du disque de frein et étant reliée à la paroi (65) de fond de la deuxième région, et
h) la paroi (64) d'appui inclinée fait, avec la paroi (65) de fond, un angle (α) dont la valeur n'est pas égale à 0° et se monte à 30°.

21. Etrier (6) de frein suivant la revendication 20, **caractérisé en ce que** l'étrier (6) de frein est constitué d'une seule pièce.

22. Etrier (6) de frein suivant la revendication 20 ou 21, **caractérisé en ce que** l'étrier (6) de frein est constitué en étrier coulissant.

23. Levier (11) tournant de frein d'un frein (1) à disque suivant l'une des revendication 1 à 8 ou 17 à 19), comportant un mécanisme de serrage ayant le levier (11) tournant de frein, au moins une unité (7, 7a) de broche ayant chacune une tige (13, 13a) filetée vissée dans un pontet (14), un étrier (6) de frein, notamment un étrier coulissant qui recouvre, de préférence à la manière d'un cadre, une partie de bord d'un disque (2) de frein, l'étrier (6) de frein comprenant une partie (6a) de serrage et un dos (6b) d'étrier, qui sont reliés entre eux par des tirants (6c), le mécanisme de serrage étant, avec le levier (11) tournant de frein, reçu sur une face (ZS) de serrage du disque (2) de frein dans la partie (6a) de serrage de l'étrier (1) de frein, la partie (6a) de serrage de l'étrier (6) de frein ayant les caractéristiques suivantes :
a) une première région dans laquelle le mécanisme (2) de serrage et une partie (110b) de transmission de force du levier (11) tournant de frein sont disposés,
b) une deuxième région qui est constituée en boîtier (6e) du levier et qui reçoit une partie (110a) du levier (11) tournant de frein,
c) dans lequel, entre la première région et la deuxième région, est disposée une paroi (62) d'appui ayant une partie (63) de palier qui forme, pour le levier (11) tournant de frein, un montage pivotant ayant un axe (26a) de levier tournant de frein s'étendant parallèlement au disque (2) de frein,
dans lequel
d) la partie (6a) de serrage a, ensemble avec le boîtier (6e) du levier, une paroi (60) commune de couverture,
e) la première région de la partie (6a) de serrage a au moins une paroi (61, 61a) de fond qui s'étend sensiblement parallèlement à une partie de la paroi (60) de couverture de la partie (6a) de serrage,
**caractérisé en ce que**
f) la deuxième région de la partie (6a) de serrage a une paroi (65) de fond qui s'étend sensiblement parallèlement à une autre partie de la paroi (60) de couverture de la partie (6a) de serrage, dans lequel
g) la paroi (62) d'appui est reliée à une paroi (64) d'appui inclinée, la paroi (64) d'appui inclinée s'étendant de manière inclinée en s'éloignant du disque (2) de frein en direction d'un axe (2a) du disque de frein et étant reliée à la paroi (65) de fond de la deuxième région, et
h) la paroi (64) d'appui inclinée fait, avec la paroi (65) de fond, un angle (α) dont la valeur n'est pas égale à 0° et se monte à 30°,
**caractérisé en ce que**
le levier (11) tournant de frein a une forme incurvée élancée dans sa direction longitudinale en ayant un corps (110) de levier ayant des parties (113) latérales, un renforcement (116) longitudinal et au moins une partie (115) de palier de poussée.

24. Levier (11) tournant de frein suivant la revendication 23, **caractérisé en ce que** le corps (110) du levier (11) tournant de frein a une partie (110a) de levier et une partie (110b) de transmission de force qui, au côté inférieur du corps (110) du levier, sont reliées au renforcement (116) longitudinal.

25. Levier (11) tournant de frein suivant la revendication 24, caractérisé la partie (110a) de levier a une extrémité (111) d'entraînement qui, à un côté supérieur de la partie (111a) d'entraînement, est destinée à coopérer avec une tige de piston d'un producteur de force et dans lequel l'extrémité (111) d'entraînement a, au côté inférieur opposé à la partie (111a) d'entraînement, une surface (111b) de butée.

26. Levier (11) tournant de frein suivant la revendication 25, **caractérisé en ce que** la partie (110b) de transmission de force du corps (110) du levier a une nervure (112) médiane à peu près hémicirculaire sur les deux côtés de laquelle est disposée, respectivement, une partie (115) hémicirculaire de palier de poussée ayant une surface (115a) respective de palier de poussée, la nervure (112) médiane étant en saillie des parties (115) de palier de poussée.

27. Levier (11) tournant de frein suivant la revendication 26, **caractérisé en ce que** la nervure (112) médiane en saillie des parties (115) de palier de poussée est destinée à être logée dans un guidage d'un pontet (14) du frein (1) à disque associé, grâce à quoi il est formé un guidage à complémentarité de forme du levier (11) tournant de frein dans la direction d'un axe (26a) de levier tournant de frein du frein (1) à disque associé.

28. Levier (11) tournant de frein suivant la revendication 26 ou 27, **caractérisé en ce que**, du côté opposé aux surfaces (115a) de palier de poussée des parties (115) de palier de poussée, est formé un logement (117) de palier ayant une section transversale à peu près hémicirculaire, le logement (117) de palier ayant une ligne médiane qui est la même que l'axe (26a) du levier tournant de frein du frein (1) à disque associé.

29. Levier (11) tournant de frein suivant la revendication 28, **caractérisé en ce que** la ligne médiane du logement (117) de palier est excentré par rapport à un centre des rayons des surfaces (115a) hémicirculaires de palier de poussée des parties (115) de palier de poussée.

30. Levier (11) tournant de frein suivant la revendication 29, **caractérisé en ce qu'**un rayon du logement (117) de palier est plus petit, par exemple de 0,6 à 0,4 fois environ plus petit, qu'un rayon des surfaces (115a) de palier de poussée des parties (115) de palier de poussée.
